# EUROPÄISCHE PATENTSCHRIFT

(11) **EP 0 716 896 B1**
(45) Veröffentlichungstag und Bekanntmachung des Hinweises auf die Patenterteilung: **22.12.1999**
(21) Anmeldenummer: 95100603.0
(22) Anmeldetag: 18.01.1995
(51) Int. Cl.: B23B 31/12

(54) **Bohrvorrichtung**
Drilling device
Dispositif de perçage

(30) Priorität: 30.11.1994 DE 4442533
(43) Veröffentlichungstag der Anmeldung: 19.06.1996
(73) Patentinhaber: Röhm, Günter Horst, D-89567 Sontheim (DE)
(72) Erfinder: Röhm, Günter Horst, D-89567 Sontheim (DE)
(74) Vertreter: Fay, Hermann, Dipl.-Phys. Dr.

(56) Entgegenhaltungen:
- EP-A- 0 195 503
- GB-A- 2 063 110
- US-A- 4 358 230

## Beschreibung

Die Erfindung betrifft eine Bohrvorrichtung mit einer antreibbaren, in einem Spindelgehäuse drehbar gelagerten Bohrspindel und mit einem an das Spindelende angeschlossenen Bohrfutter mit Spannbacken zur Aufnahme eines Bohrwerkzeugs, wobei das Bohrfutter einen mit der Bohrspindel koaxialen und drehfest verbundenen Futterkörper und zum verstellen der Spannbacken eine koaxiale und relativ zum Futterkörper verdrehbare Spannhülse aufweist, und wobei zum Spannen und Lösen des Bohrfutters durch die Bohrspindel zwischen dem Spindelgehäuse und der Spannhülse eine Kupplungseinrichtung vorgesehen ist, welche eine am Spindelgehäuse gegen Mitdrehen mit dem Bohrfutter gehaltene, relativ zum Bohrfutter axial verstellbare Kupplungshülse umfaßt, die in gegen das Bohrfutter vorgestellter, dem eingekuppelten Zustand der Kupplungseinrichtung entsprechender Lage die Spannhülse in Umfangsrichtung kraftschlüssig mit dem Spindelgehäuse verbindet und durch eine Entkupplungsfeder in eine vom Bohrfutter zurückgestellte, dem ausgekuppelten Zustand der Kupplungseinrichtung entsprechende Lage verstellbar ist, in der keine Kupplungsverbindung mit der Spannhülse besteht.

Bohrvorrichtungen dieser Art bieten den Vorteil, daß das Bohrfutter ohne Verwendung eines Futterschlüssels nur unter Ausnutzung des an der Bohrspindel zur Verfügung stehenden Drehmoments geschlossen und gespannt und wieder geöffnet werden kann, indem der Futterkörper durch die fest mit ihm verbundene Bohrspindel maschinell gedreht wird, während das Mitdrehen der Spannhülse behindert wird. Bei einer aus EP 0 195 503 A1 bekannten Bohrvorrichtung mit den eingangs genannten Merkmalen kann die am Spindelgehäuse axial verschiebbare, jedoch nicht verdrehbare Kupplungshülse von Hand gegen die Kraft der Entkupplungsfeder zur Spannhülse hin soweit vorgeschoben werden, daß an der Kupplungshülse einerseits und an der Spannhülse andererseits einander zugeordnete Kupplungsglieder bei sich drehender Bohrspindel in Drehrichtung aneinander zum Anschlag kommen. Dabei sind die Flankenflächen, mit denen die Kupplungsglieder aneinander anschlagen, gegen die Spindelachse geneigt, so daß beim Anschlag die Kupplungshülse gegen die Kraft der sie festhaltenden Hand vorübergehend bis zur Freigabe der Spannhülse axial zurückgedrückt wird. Im Ergebnis kann auf die Spannhülse eine Folge von in Umfangsrichtung wirkenden Schlägen ausgeübt werden, durch die es je nach Drehrichtung der Bohrspindel möglich ist, das Bohrfutter zu spannen oder zu lösen. - Nachteilig hierbei ist zunächst, daß die Kupplunghülse bei laufendem Bohrfutter von Hand gehalten und geführt werden muß, was leicht mit der Gefahr von Verletzungen verbunden ist, und ferner der Umstand, daß die erreichte Größe der Spannkraft abhängig von der Art der Handhabung der Kupplungshülse sehr unterschiedlich sein kann, ein bezüglich der Größe seiner Spannkraft definierter Spannvorgang also kaum möglich ist.

Der Erfindung liegt die Aufgabe zugrunde, eine Bohrvorrichtung der eingangs genannten Art so auszubilden, daß eine Betätigung der Kupplungshülse von Hand bei laufender Bohrspindel vermieden wird und daß der Spannvorgang in jedem Fall eine definierte Spannkraft ergibt.

Diese Aufgabe wird bei einer Bohrvorrichtung mit den eingangs genannten Merkmalen nach der Erfindung dadurch gelöst, daß die Kupplungshülse durch eine Sperreinrichtung im eingekuppelten Zustand gehalten ist und daß die Sperreinrichtung sich öffnet und die Verstellung der Kupplungshülse in den ausgekuppelten Zustand freigibt, wenn das im eingekuppelten Zustand zwischen der Spannhülse und der Kupplungshülse übertragene Drehmoment eine vorgegebene Größe überschreitet.

Bei der erfindungsgemäßen Bohrvorrichtung wird zunächst bei noch stillstehender Bohrspindel die Kupplungshülse von Hand in ihre dem eingekuppelten Zustand entsprechende Lage verstellt und in dieser Lage von der Sperreinrichtung festgehalten, so daß sie von der Hand losgelassen werden kann. Wird dann die Bohrspindel angetrieben, wird die Kupplungshülse von der Kupplungseinrichtung am Mitdrehen gehindert, bis das sich zwischen der Spannhülse und der Kupplungshülse aufbauende Drehmoment die für das Öffnen der Sperreinrichtung vorgegebene Größe erreicht, wobei diese Größe selbstverständlich so bemessen ist, daß das Drehmoment, je nach Drehrichtung der Bohrspindel, zum Schließen und Spannen bzw. Lösen und Öffnen des Bohrfutters ausreicht. Da dieses Drehmoment im übrigen stets gleich ist, wird beim Schließen des Bohrfutters auch immer die gleiche Spannkraft erreicht. Hat sich die Sperreinrichtung geöffnet, verstellt sich die Kupplungshülse, auch bei weiterlaufender Bohrspindel, selbsttätig durch die Entkupplungsfeder in die dem entkuppelten Zustand der Kupplungseinrichtung entsprechende Lage, so daß sich die Spannhülse frei mit dem Futterkörper drehen kann.

Die Öffnung der Sperreinrichtung in Abhängigkeit von dem zwischen der Spannhülse und der Kupplungshülse auftretenden Drehmoment kann auf verschiedene Weise erfolgen. Eine in dieser Hinsicht besonders bevorzugte Ausführungsform ist nach der Erfindung dadurch gekennzeichnet, daß an der Kupplungshülse und der Spannhülse einander zugeordnete Kupplungsglieder vorgesehen sind, die im eingekuppelten Zustand der Kupplungseinrichtung durch eine Kupplungsfeder im gegenseitigen Kupplungseingriff gehalten sind und in Umfangsrichtung aneinander mit Flankenflächen anliegen, die gegen die Spindelachse so geneigt sind, daß bei der für die Öffnung der Sperreinrichtung vorgegebenen Drehmomentgröße die Spannhülse über die Flankenflächen auf die Kupplungshülse axial gerichtete Kraftkomponenten ausübt, welche die Sperreinrichtung öffnen. Dabei bestimmen einerseits die Kraft der Kupplungsfeder und andererseits der Neigungswinkel der Flankenflächen die Größe des Drehmoments, bei der sich die Sperreinrichtung öffnet. Es ergib sich dadurch auf einfache Weise die Möglichkeit, diese Drehmomentgröße in der einen Drehrichtung anders als in der anderen Drehrichtung zu wählen, indem die Flankensteilheit der in der jeweiligen Drehrichtung aneinander zur Anlage kommenden Flankenflächen entsprechend verschieden gewählt wird. Insbes. kann es sich erweisen, daß das zum Lösen des Bohrfutters benötigte Drehmoment größer sein muß als das zum Spannen des Bohrfutters. In diesem Fall empfiehlt es sich, die Anordnung so zu treffen, daß die Kupplungsglieder sägezahnartig mit von der Zahnbrust gebildeter steilerer Flankenfläche und vom Zahnrücken gebildeter flacherer Flankenfläche geformt sind, wobei an der Spannhülse in ihrem dem Öffnen des Bohrfutters entsprechenden Drehsinn die Zahnbrust jedes Kupplungsgliedes seinem Zahnrücken voranläuft.

Im Kupplungseingriff der Kupplungsglieder kann das sich zwischen der Spannhülse und der Kupplungshülse aufbauende Drehmoment dazu führen, daß die Spannhülse über die Flankenflächen die Kupplungshülse in Richtung einer Aufhebung des Kupplungseingriffs verstellt, welche Verstellung zur Öffnung der Sperreinrichtung genutzt werden kann. In bevorzugter Ausführungsform wird dazu die Sperreinrichtung durch einen axialen Verstellweg der Kupplungshülse geöffnet, der höchstens gleich ist der in axialer Richtung maximalen gegenseitigen Überlappung der Kupplungsglieder im eingekuppelten Zustand der Kupplungseinrichtung. Die Sperreinrichtung wird dann bereits geöffnet, ehe noch der Kupplungseingriff der Kupplungsglieder vollständig aufgehoben ist.

Um die Sperreinrichtung auf möglichst einfache Weise ausbilden zu können, empfiehlt es sich, daß die Kupplungshülse undrehbar am Spindelgehäuse geführt ist. Vorzugsweise ist dann die Sperreinrichtung als Rastvorrichtung mit einer Ringnut als Rastsitz und einem darin einrastenden Federring als Rastfeder und Rastglied ausgebildet, wobei der Federring als Kupplungsfeder dient und im eingerasteten Zustand die Kupplungshülse in ihrer dem eingekuppelten Zustand der Kupplungseinrichtung entsprechenden Lage hält sowie unter den axialen Kraftkomponenten aus der Ringnut ausrastet, welche die Spannhülse bei der für die Öffnung der Sperreinrichtung vorgegebenen Drehmomentgröße über die Flankenflächen auf die Kupplungshülse ausübt. Damit sich dann die Kupplungshülse nach dem Ausrasten vollständig in ihre dem ausgekuppelten Zustand entsprechende Lage verstellt, schließt sich in bevorzugter Ausführungsform in der dem Auskuppeln der Kupplungseinrichtung entsprechenden Verschiebungsrichtung der Kupplungshülse an den Rand der Ringnut eine sich etwa konisch verjüngende Ringfläche an, auf der der aus der Ringnut ausgerastete Federring in Folge seiner Federspannung in Verjüngungsrichtung verrutscht, wobei der Federring als Entkupplungsfeder dient und die Kupplungshülse in ihre dem ausgekuppelten Zustand entsprechende Lage verstellt. Im Ergebnis erfüllt der Federring die Aufgaben sowohl der Kupplungsfeder als auch der Entkupplungsfeder. Zweckmäßigerweise sind die Ringnut und die Ringfläche auf der Seite des Spindelgehäuses ausgebildet und ist der Federring an der Kupplungshülse gehalten. Um die Kupplungshülse einzurasten, kann sie direkt von Hand erfaßt und axial aus ihrer dem ausgekuppelten Zustand entsprechenden Lage in die dem eingekuppelten Zustand entsprechende Lage verschoben werden. Es besteht aber auch die Möglichkeit, am Spindelgehäuse einen drehbar geführten Stellring anzuordnen, der bei einer Drehbewegung die Kupplungshülse in ihre dem eingekuppelten Zustand entsprechende Lage verschiebt. Im einzelnen empfiehlt es sich, daß der Stellring axial unverschieblich ist und beim Drehen die Kupplungshülse über eine Stellkurve verschiebt. Eine zweckmäßige Ausführungsform ist dadurch gekennzeichnet, daß die Stellkurve über den Ringumfang verteilte, jeweils auf ein Zwischenstück folgende Rampenstücke aufweist, wobei die Rampenstücke die Kupplungshülse in die dem eingekuppelten Zustand entsprechende Lage verstellen und die Zwischenstücke die Verstellung der Kupplungshülse in ihre dem ausgekuppelten Zustand entsprechende Lage freigeben. Es besteht die Möglichkeit, daß der Stellring nach Verdrehen um die Länge eines Zwischenstücks und eines Rampenstücks in einer Raststellung am Spindelgehäuse einrastet, in der die Verstellung der Kupplungshülse in ihre dem ausgekuppelten Zustand entsprechende Lage freigegeben ist. Der Stellring kann dann ohne Drehwegbegrenzung von Raststellung zu Raststellung verdreht werden. Es besteht aber auch die Möglichkeit, daß der Stellring durch Anschlagflächen auf Seiten des Spindelgehäuses auf einen Drehweg von jeweils nur der Länge eines Rampenstücks begrenzt ist und daß eine Rückholfeder vorgesehen ist, die nach jeder Drehbewegung, welche die Kupplungshülse in ihre dem eingekuppelten Zustand entsprechende Lage verstellt, den Stellring in die Ausgangsstellung zurückdreht, in der die Verstellung der Kupplungshülse in ihre dem ausgekuppelten Zustand entsprechende Lage durch den Stellring freigegeben ist. Eine andere vorteilhafte Ausführungsform ist dadurch gekennzeichnet, daß die Rampenstücke und die Zwischenstücke von einer an der Wand der Kupplungshülse vorgesehenen Steuernut gebildet sind, die am Stellring vorgesehene Steuernocken aufnimmt und im Bereich jedes Zwischenstücks eine Anschlagfläche aufweist, an der jeweils ein Steuernocken in Drehrichtung des Stellrings zur Anlage kommt, wenn die Kupplungshülse durch das vorangegangene Rampenstück in ihre dem eingekuppelten Zustand entsprechende Lage verstellt ist.

Die Sperreinrichtung kann auch auf andere Weise als durch eine Rastvorrichtung gebildet sein, wenn die Kupplungshülse undrehbar am Spindelgehäuse geführt ist. Eine solche andere, sehr vorteilhafte Ausführungsform ist erfindungsgemäß dadurch gekennzeichnet, daß die Kupplungshülse zwischen zwei axial auseinander liegenden Begrenzungen an einem Betätigungsring verschiebbar und durch die Kupplungsfeder in Anlage an der zum Bohrfutter hin liegenden Begrenzung gehalten ist, wobei der Verschiebungsweg zwischen den Begrenzungen mindestens gleich dem die Sperreinrichtung öffnenden axialen Verstellweg der Kupplungshülse und dieser gleich dem Federweg ist, um den die Kupplungsfeder durch die axialen Kraftkomponenten spannbar ist, welche die Spannhülse bei der für die Öffnung der Sperreinrichtung vorgegebenen Drehmomentgröße über die Flankenflächen auf die Kupplungshülse ausübt, daß ferner der Betätigungsring am Spindelgehäuse zwischen einer Ausgangsstellung und einer Kupplungsstellung verdrehbar und dabei an einer Steuerkurve zwangsgeführt axial verschiebbar ist, so daß der Betätigungsring bei seiner Verschiebung die Kupplungshülse zwischen ihren dem eingekuppelten Zustand und dem ausgekuppelten Zustand der Kupplungseinrichtung entsprechenden Lagen verstellt, wobei die Ausgangsstellung des Betätigungsrings der Lage der Kupplungshülse im ausgekuppelten Zustand, die Kupplungsstellung ihrer Lage im eingekuppelten Zustand der Kupplungseinrichtung entspricht, und wobei der Betätigungsring in Umfangsrichtung mit der Kupplungshülse durch die Entkupplungsfeder verbunden ist, die sich beim Verdrehen des Betätigungsrings aus der Ausgangsstellung in die Kupplungsstellung spannt, und daß der Betätigungsring in der Kupplungsstellung gegen die Kraft der Entkupplungsfeder an der Kupplungshülse in einem Anschlag abgestützt ist, der durch Verschieben der Kupplungshülse um ihren die Sperreinrichtung öffnenden axialen Verstellweg aufgehoben wird und dann die Rückdrehung des Betätigungsrings in die Ausgangsstellung durch die Entkupplungsfeder freigibt. Im einzelnen empfiehlt es sich dann, daß die Kupplungsfeder von mehreren längs des Umfangs der Kupplungshülse angeordneten Federgliedern gebildet ist, die zwischen der Kupplungshülse einerseits und dem Betätigungsring andererseits angeordnet und vorgespannt sind. Zweckmäßigerweise ist die Steuerkurve für den Betätigungsring durch Steuernuten auf Seiten des Spindelgehäuses gebildet und der Betätigungsring mit in die Steuernuten greifenden Steuernocken versehen.

Die Kupplungshülse undrehbar am Spindelgehäuse zu führen ist keine im Rahmen der Erfindung notwendige Voraussetzung. So ist eine bevorzugte Ausführungsform, bei der diese Voraussetzung nicht besteht, erfindungsgemäß dadurch gekennzeichnet, daß die relativ zum Spindelgehäuse gegen die Kraft der Kupplungsfeder verdrehbare Kupplungshülse mit einem Steuervorsprung in einer auf Seiten des Spindelgehäuses vorgesehenen Steuernut geführt ist, die zwei in Umfangsrichtung axial nebeneinander verlaufende Nutabschnitte und drei diese Nutabschnitte verbindende axial verlaufende Nutabschnitte aufweist, daß der axiale Abstand zwischen den in Umfangsrichtung verlaufenden beiden Nutabschnitten gleich dem axialen Verstellweg der Kupplungshülse zwischen ihren dem ausgekuppelten und dem eingekuppelten Zustand entsprechenden beiden Lagen und der Umfangsabstand zwischen jeweils zwei aufeinander folgenden, axial verlaufenden Nutabschnitten im wesentlichen gleich dem Federweg ist, um den sich beim Schließen bzw. Öffnen des Bohrfutters die Kupplungsfeder aus ihrem Ausgangszustand unter der für die Öffnung der Sperreinrichtung vorgegebenen Drehmomentgröße jeweils in der einen oder anderen Drehrichtung spannt, wobei der mittlere axial verlaufende Nutabschnitt gegenüber der dem Ausgangszustand der Kupplungsfeder entsprechenden Stellung des Steuervorsprungs in Umfangsrichtung etwas versetzt ist, so daß der dieser Versetzung entsprechende Federweg der Kupplungsfeder eine Federvorspannung ergibt, und daß am Spindelgehäuse eine koaxiale, drehbar geführte und axial unverschiebbare Stellhülse vorgesehen ist, die beim Verdrehen über eine Steuerschräge die Kupplungshülse zunächst in ihrer dem ausgekuppelten Zustand entsprechenden Lage aus ihrer dem Ausgangszustand der Kupplungsfeder entsprechenden Drehstellung in Drehrichtung mitnimmt und dann in Verbindung mit der dadurch vorgespannten Kupplungsfeder in die dem eingekuppelten Zustand entsprechende Lage verstellt, wenn der Steuervorsprung den mittleren axial verlaufenden Nutabschnitt erreicht, sowie danach die Kupplungshülse wieder zur Rückstellung in die dem ausgekuppelten Zustand entsprechende Lage freigibt, wenn der Steuervorsprung sich in einem der beiden anderen axial verlaufenden Nutabschnitte befindet. Im einzelnen empfiehlt es sich, an den Wänden der Steuernut und/oder am Steuervorsprung den Übergang des Steuervorsprungs zwischen den in Umfangsrichtung und den axial verlaufenden Nutabschnitten erleichternde Leitschrägen vorzusehen. Auch empfiehlt es sich, die Anordnung so zu treffen, daß die Stellhülse gegenüber dem Spindelgehäuse in Raststellungen einrastet, in welchen sie die Rückstellung der Kupplungshülse in deren dem ausgekuppelten Zustand entsprechende Lage freigibt.

In der Regel erfolgt die Rückstellung der Kupplungshülse in ihre dem ausgekuppelten Zustand der Kupplungseinrichtung entsprechende Lage über die Verdrehung des Bohrfutters mit Hilfe der Bohrspindel, wenn das von der Spannhülse des Bohrfutters auf die Kupplungshülse übertragene Drehmoment die für die Öffnung der Sperreinrichtung vorgegebene Größe erreicht. Das erfordert die Betätigung des Bohrspindelantriebs. Um den eingekuppelten Zustand aber auch von Hand ohne Einschalten der Bohrspindel aufheben zu können, besteht bei der zuletzt beschriebenen Ausführungsform mit relativ zum Spindelgehäuse begrenzt verdrehbarer Kupplungshülse eine besonders einfache Möglichkeit, die Sperreinrichtung so weiter auszubilden, daß der eingekuppelte Zustand auch bei stillstehendem Bohrfutter allein durch Verdrehen der Stellhülse von Hand aufgehoben werden kann. Die dafür bevorzugte Ausführungsform ist dadurch gekennzeichnet, daß die Kupplungshülse einen Lösevorsprung und die Stellhülse einen dem Lösevorsprung zugeordneten Stellnocken trägt, die in der dem ausgekuppelten Zustand entsprechenden axialen Lage der Kupplungshülse in Umfangsrichtung einander berührungslos passieren, in der dem eingekuppelten Zustand entsprechenden Lage der Kupplungshülse dagegen in Umfangsrichtung aneinander zum Anschlag kommen, wenn jeweils die Kupplungshülse und die Stellhülse gegeneinander verdreht werden, wobei der Anschlag von Lösevorsprung und Stellnocken aneinander in derart geneigten Anschlagflächen erfolgt, daß der Stellnocken den Lösevorsprung mit einer axialen Kraftkomponente in derjenigen Richtung beaufschlagt, in der die Verschiebung der Kupplungshülse aus ihrer den eingekuppelten Zustand entsprechende Lage in ihre dem ausgekuppelten Zustand entsprechende Lage stattfindet.

Schwierigkeiten können im übrigen unter Umständen dann entstehen, wenn bei laufender Bohrspindel und sich entsprechend drehendem Bohrfutter versucht werden sollte, die Kupplungseinrichtung aus dem aus- in den eingekuppelten Zustand zu verstellen, die Kupplungshülse also gegen das Bohrfutter vorzuverstellen, ehe die Bohrspindel stillgesetzt und das Bohrfutter zum Stillstand gekommen ist. Um eine solche Situation auszuschließen, empfiehlt es sich bei Bohrvorrichtungen, bei denen die Kupplungshülse durch Verdrehen eines Ringteils in die dem eingekuppelten Zustand entsprechende Lage verstellt wird, den Spindelantrieb in Abhängigkeit von der Drehstellung dieses Ringteils zu schalten. Eine in diesem Zusammenhang bevorzugte Ausführungsform der erfindungsgemäßen Bohrvorrichtung ist dadurch gekennzeichnet, daß zwischen dem Spindelgehäuse einerseits und dem Stellring, dem Betätigungsring oder der Stellhülse andererseits ein deren Drehstellung relativ zum Spindelgehäuse erfassender Stellungsmelder vorgesehen ist, der eine den Antrieb der Bohrspindel aus- und einschaltende Schalteinrichtung derart steuert, daß der Spindelantrieb ausgeschaltet ist, wenn der Stellring, der Betätigungsring oder die Stellhülse aus der Drehstellung, die der Lage der Kupplungshülse im ausgekuppelten Zustand der Kupplungseinrichtung entspricht, in die Drehstellung verstellt wird, die der Lage der Kupplungshülse im eingekuppelten Zustand der Kupplungseinrichtung entspricht. Zweckmäßigerweise umfaßt der Stellungsmelder einen berührungslos arbeitenden induktiven Näherungsschalter auf der Seite des Spindelgehäuses und einen den Näherungsschalter magnetisch beeinflussenden Indikatorstreifen am Stellring, Betätigungsring oder an der Stellhülse.

Wenn vorstehend wiederholt auf das Spindelgehäuse Bezug genommen ist, soll dies im Rahmen der Erfindung nur eine Bezugnahme auf ein wie das Spindelgehäuse feststehendes, an der Drehung der Bohrspindel also nicht teilnehmendes Teil der Bohrvorrichtung bedeuten. Handelt es sich bei der Bohrvorrichtung beispielsweise um eine Handbohrmaschine, bei der das Maschinengehäuse zugleich das Spindelgehäuse bildet, schließt die Bezugnahme auf das Spindelgehäuse die auf das gesamte Maschinengehäuse schlechthin selbstverständlich ein. Auch ist die Bezugnahme auf das Spindelgehäuse im Rahmen der Erfindung nicht so zu verstehen, daß die Kupplungshülse und die spindelgehäuseseitigen Teile der Sperreinrichtung nur direkt und unmittelbar am Spindelgehäuse angeordnet bzw. geführt sein müßten, was Sonderausführungen des Spindelgehäuses voraussetzen würde und deswegen sogar nachteilig wäre. Vielmehr empfiehlt es sich, eine eigene Futterhülse vorzusehen, an dieser die Kupplungshülse und alle spindelgehäuseseitigen Teile der Sperreinrichtung anzuordnen bzw. zu führen und bei einem Spindelgehäuse bzw. Bohrmaschinengehäuse mit einem mit der Bohrspindel koaxialen Gehäusehals die Futterhülse unverrückbar auf den Gehäusehals aufzusetzen. Da der Gehäusehals in seinen Abmessungen in der Regel genormt ist, kann die erfindungsgemäße Bohrvorrichtung mit Hilfe einer solchen Futterhülse bei jeder vorhandenen Bohrmaschine, unabhängig von deren Bauform im übrigen, zum Einsatz kommen.

Im folgenden wird die Erfindung an in der Zeichnung dargestellten Ausführungsbeispielen näher erläutert; es zeigen:
- Fig. 1: eine Bohrvorrichtung nach der Erfindung in einem Axialschnitt,
- Fig. 2: eine andere Ausführungsform der erfindungsgemäßen Bohrvorrichtung im Axialschnitt,
- Fig. 3: den Schnitt III-III in Fig. 2,
- Fig. 4: den Schnitt IV-IV in Fig. 2 in einer Abwicklung längs des Futterumfangs,
- Fig. 5: eine weitere Ausführungsform der Bohrvorrichtung im Axialschnitt,
- Fig. 5a: den Schnitt Va - Va in Fig. 5,
- Fig. 6: den Schnitt VI-VI in Fig. 5 in einer Abwicklung längs des Futterumfangs, und zwar in den Teilfiguren a, b und c in verschiedenen Betriebszuständen der Bohrvorrichtung,
- Fig. 7: eine nochmals andere Ausführungsform der erfindungsgemäßen Bohrvorrichtung im Axialschnitt,
- Fig. 8: den Schnitt VIII-VIII in Fig. 7 in einer Abwicklung längs des Futterumfangs,
- Fig. 9: eine wiederum andere Bohrvorrichtung nach der Erfindung im Axialschnitt,
- Fig.10: den Schnitt X-X in Fig. 9,
- Fig.11: den Schnitt XI-XI in Fig. 9 in einer Abwicklung längs des Futterumfangs, und zwar in den Teilfiguren a und b in verschiedenen Betriebszuständen der Bohrvorrichtung,
- Fig.12: eine abermals andere Ausführungsform der erfindungsgemäßen Bohrvorrichtung im Axialschnitt,
- Fig.13: den Schnitt XIII-XIII in Fig. 12, und
- Fig.14: die Schnitte A-A und B-B in Fig. 12 in übereinander liegender Darstellung und abgewickelt in Umfangsrichtung, wobei die Teilfiguren a bis f verschiedene Betriebszustände der Bohrvorrichtung zeigen.

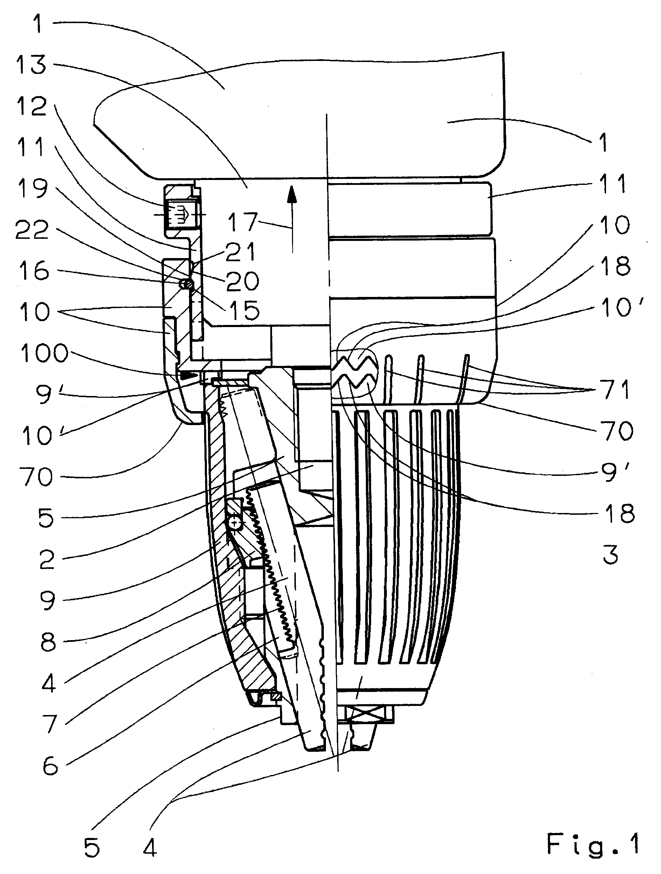

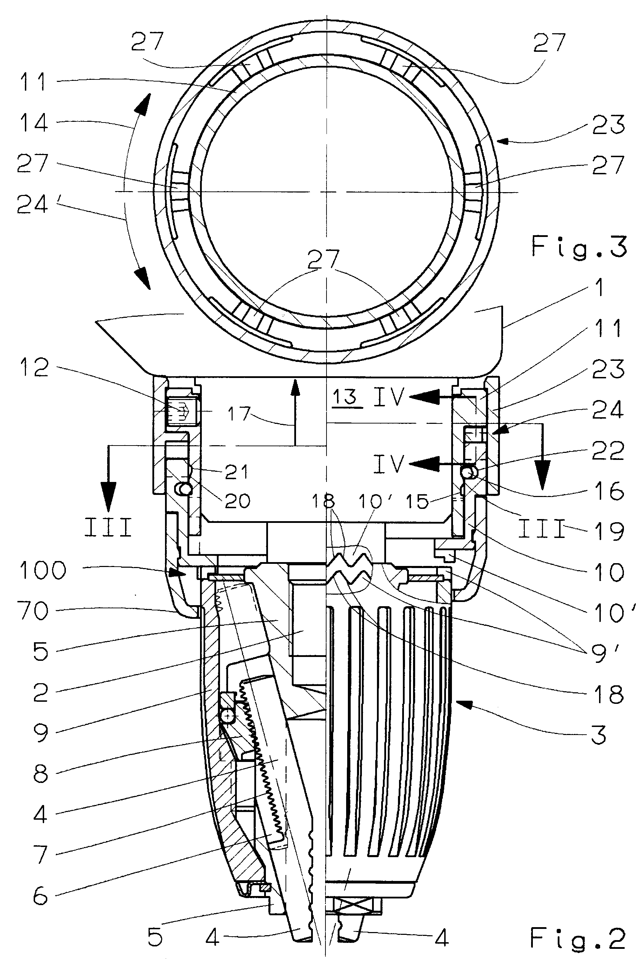

Die in der Zeichnung dargestellten Bohrvorrichtungen umfassen eine nur mit ihrem vorderen Teil gezeichnete Bohrmaschine, in deren Spindelgehäuse 1 eine in üblicher, im einzelnen nicht dargestellter Weise durch einen Motor antreibbare Bohrspindel 2 drehbar gelagert ist. Am aus dem Spindelgehäuse 1 vorstehenden Ende der Bohrspindel ist ein Bohrfutter 3 angeschlossen, das mit Spannbacken 4 zur Aufnahme eines in der Zeichnung ebenfalls nicht dargestellten Bohrwerkzeugs ausgestattet ist. Das Bohrfutter 3 umfaßt einen mit der Bohrspindel 2 koaxialen und drehfest verbundenen Futterkörper 5, der zur Achse der Bohrspindel 2 geneigt verlaufende Führungskanäle 6 besitzt, in dem die Spannbacken 4 verschiebbar sind. Die Spannbacken 4 stehen über eine Verzahnung 7 mit einem Gewindering 8 einer am Futterkörper 5 drehbar und unverschiebbar geführten Spannhülse 9 in Verbindung. Durch Verdrehen der Spannhülse 9 in der einen oder anderen Drehrichtung werden die Spannbacken 4 im Futterkörper vor- oder zurückgestellt, wobei im ersteren Fall das Bohrfutter 3 geschlossen und das Bohrwerkzeug gespannt, im letzteren Fall das Bohrfutter 3 geöffnet wird. Das Schließen und Spannen bzw. Lösen und Öffnen des Bohrfutters 3 erfolgt mit Hilfe der Bohrspindel 2 in der Weise, daß bei laufender Bohrspindel 2 die Spannhülse 9 mittels einer zwischen dem Spindelgehäuse 1 und der Spannhülse 9 vorgesehenen, allgemein mit 100 bezeichnete Kupplungseinrichtung festgehalten wird. Dazu dient eine gegen Mitdrehen mit der Bohrspindel 2 und dem Bohrfutter 3 festgehaltene Kupplungshülse 10, die relativ zum Bohrfutter axial verstellbar ist und in gegen das Bohrfutter 3 vorgestellter, dem eingekuppelten Zustand der Kupplungseinrichtung 100 entsprechender Lage die Spannhülse 9 in Umfangsrichtung kraftschlüssig mit dem Spindelgehäuse 2 verbindet. Durch eine Entkupplungsfeder (Federring 16, Kupplungsfeder 51 oder Feder 38) ist die Kupplungshülse 10 in eine vom Bohrfutter 3 zurückgestellte, dem ausgekuppelten Zustand der Kupplungseinrichtung 100 entsprechende Lage verstellbar. In diesem ausgekuppelten Zustand besteht keine Kupplungsverbindung mit der Spannhülse 9, die sich somit unbehindert mit dem Futterkörper 5 drehen kann. Die Kupplungshülse 10 ist an einer Futterhülse 11 geführt, die ihrerseits mit einer Spannschraube 12 unverrückbar auf dem Hals 13 des Spindelgehäuses 1 befestigt ist. Die Kupplungshülse 10 ist durch eine Sperreinrichtung im eingekuppelten Zustand gehalten (z. B. Fig. 1, 2, linke Figurenhälfte). Die Sperreinrichtung öffnet sich und gibt die Verstellung der Kupplungshülse 10 in den ausgekuppelten Zustand frei (z. B. Fig. 1, 2 rechte Figurenhälfte), wenn das im eingekuppelten Zustand zwischen der Spannhülse 9 und der Kupplungshülse 10 übertragene Drehmoment eine vorgegebene Größe überschreitet.

An der Kupplungshülse 10 einerseits und der Spannhülse 9 andererseits sind einander zugeordnete Kupplungsglieder 9', 10' vorgesehen, die im eingekuppelten Zustand der Kupplungseinrichtung 100 durch eine Kupplungsfeder (Federring 16, Kupplungsfeder 51 oder Federn 50) im gegenseitigen Kupplungseingriff gehalten sind und bei sich drehender Bohrspindel 2 in Umfangsrichtung aneinander mit Flankenflächen 18 anschlagen, die gegen die Spindelachse geneigt sind. Der Neigungswinkel ist dabei so gewählt, daß bei der für die Öffnung der Sperreinrichtung vorgegebenen Drehmomentgröße die Spannhülse 9 über die Flankenflächen 18 auf die Kupplungshülse 10 axial gerichtete Kraftkomponenten ausübt, die ausreichen, die Sperreinrichtung zu öffnen, so daß sich die Kupplungshülse 10 in ihre dem ausgekuppelten Zustand der Kupplungseinrichtung 100 entsprechende Lage zurückstellen kann. In allen Ausführungsbeispielen besitzen die Zahnflanken in der einen wie in der anderen Drehrichtung dieselbe Flankenneigung, so daß die zum Öffnen der Sperreinrichtung führenden Drehmomente in beiden Drehrichtungen gleich groß sind. Wird aber beispielsweise für das Lösen und Öffnen des Bohrfutters ein größeres Drehmoment als für das Schließen und Spannen benötigt, können die Kupplungsglieder 9', 10' sägezahnartig mit von der Zahnbrust gebildeter steilerer Flankenfläche und vom Zahnrücken gebildeter flacherer Flankenfläche geformt sein, wobei an der Spannhülse 9 in ihrem dem Öffnen des Bohrfutters 3 entsprechenden Drehsinn (Pfeil 14) die Zahnbrust jedes Kupplungsgliedes 9' seinem Zahnrücken voranläuft. In allen Ausführungsbeispielen wird im übrigen die Sperreinrichtung durch einen axialen Verstellweg der Kupplungshülse 10 geöffnet, der höchestens gleich groß ist wie die in axialer Richtung maximale gegenseitige Überlappung der Kupplungsglieder 9', 10' im eingekuppelten Zustand der Kupplungseinrichtung 100. Diese Überlappung ist gleich der axialen Zahnhöhe der Kupplungsglieder 9', 10'.

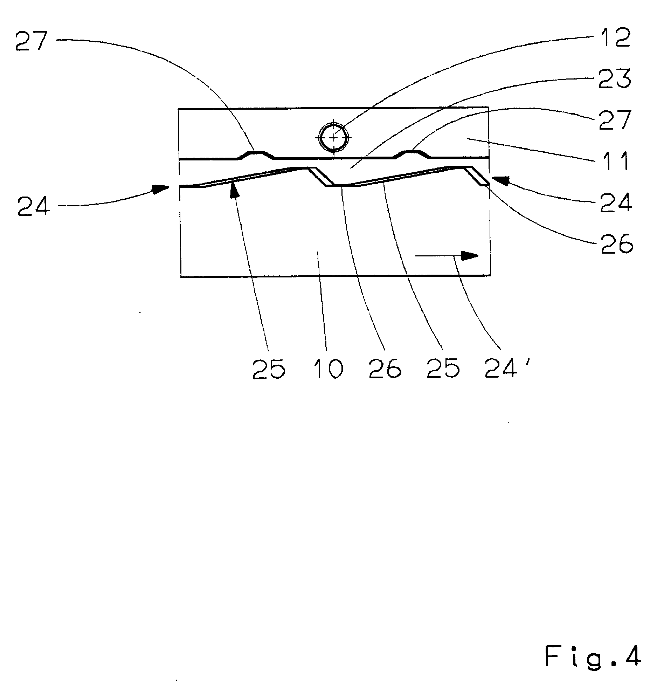

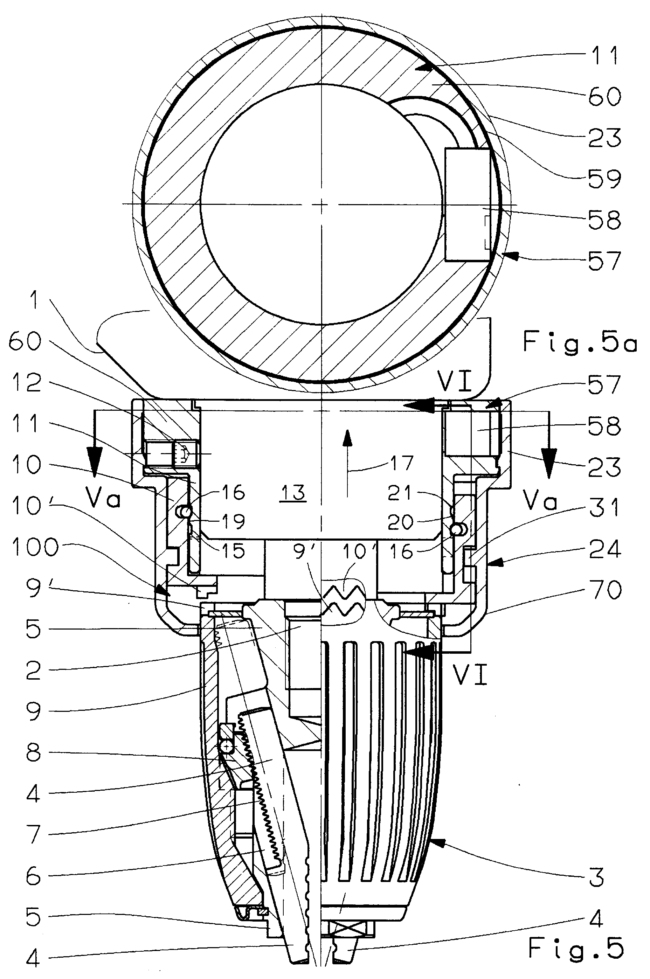

In den Ausführungsbeispielen nach den Fig. 1 bis 8 ist die Kupplungshülse 10 undrehbar an der Futterhülse 11 geführt, also entsprechend undrehbar gegenüber dem Spindelgehäuse 1. Die Sperreinrichtung ist als Rastvorrichtung mit einer Ringnut 15 als Rastsitz und einem darin einrastenden Federring 16 als zugleich Rastfeder und Rastglied ausgebildet. Dabei dient der Federring 16 als Kupplungsfeder. Im eingerasteten Zustand hält der Federring 16 die Kupplungshülse 10 in ihrer dem eingekuppelten Zustand der Kupplungseinrichtung 100 entsprechenden Lage, die in den Fig. 1, 2 und 7 in der linken Figurenhälfte, in Fig. 5 in der rechten Figurenhälfte dargestellt ist. In der jeweils anderen Figurenhälfte ist die Kupplungshülse 10 in ihrer dem ausgekuppelten Zustand der Kupplungseinrichtung 100 entsprechenden Lage dargestellt. Damit die Kupplungshülse 10 aus ihrer dem eingekuppelten Zustand entsprechenden Lage in die dem ausgekuppelten Zustand entsprechende Lage verstellt wird, muß der Federring 16 aus der Ringnut 15 ausrasten, was unter der Wirkung der axialen Kraftkomponenten geschieht, welche die Spannhülse 9 bei der für die Öffnung der Sperreinrichtung vorgegebenen Drehmomentgröße über die Flankenflächen 18 auf die Kupplungshülse 10 ausübt. In der dem Auskuppeln der Kupplungseinrichtung 100 entsprechenden, also zum Gehäusehals 13 hin weisenden Verschiebungsrichtung (Pfeil 17) der Kupplungshülse 10 schließt sich an den Rand 19 der Ringnut 15 eine sich etwa konisch verjüngende Ringfläche 20 an. Auf dieser Ringfläche 20 verrutscht der aus der Ringnut 15 ausgerastete Federring 16 in Folge seiner radial einwärts gerichteten Federspannung in der Verjüngungsrichtung (Pfeil 17) der Ringfläche 20, so daß dabei der Federring 16 jetzt als Entkupplungsfeder dient und die Kupplungshülse 10 in ihre dem ausgekuppelten Zustand entsprechende Lage verstellt, in welcher der Federring 16 in der Nachbarnut 21 liegt. Die Ringnut 15 und die Ringfläche 20 sind auf der Seite des Spindelgehäuses 1, also an der Futterhülse 11 ausgebildet, während der Federring 16 an der Kupplungshülse 10 gehalten ist, nämlich dort in einer umlaufenden Rille 22 liegt, die radial so tief ist, daß sie den Federring 16 soweit aufzunehmen vermag, wie es zu dessen Ausrasten aus der als Rastsitz 15 dienenden Ringnut erforderlich ist.

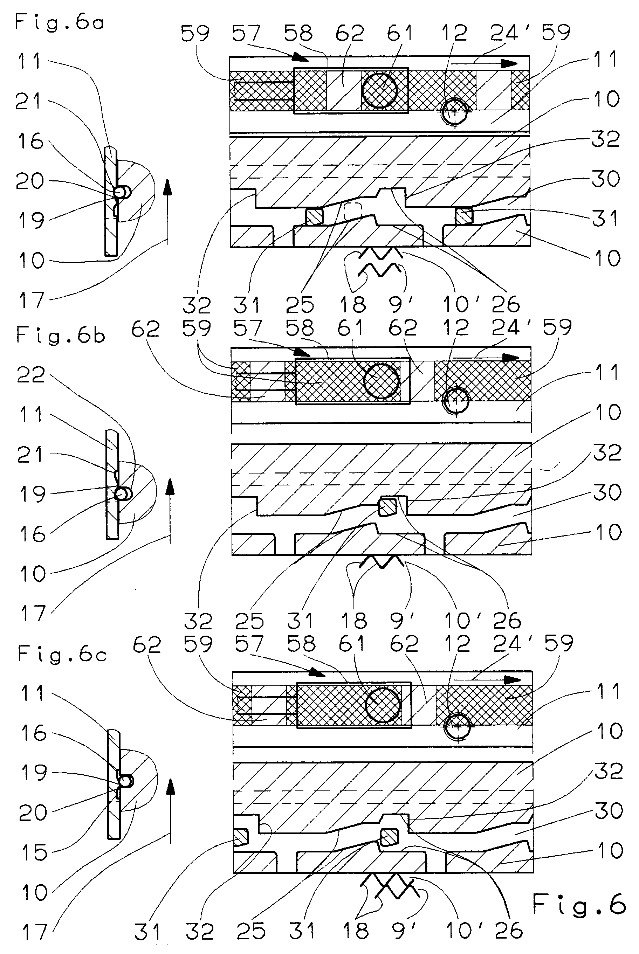

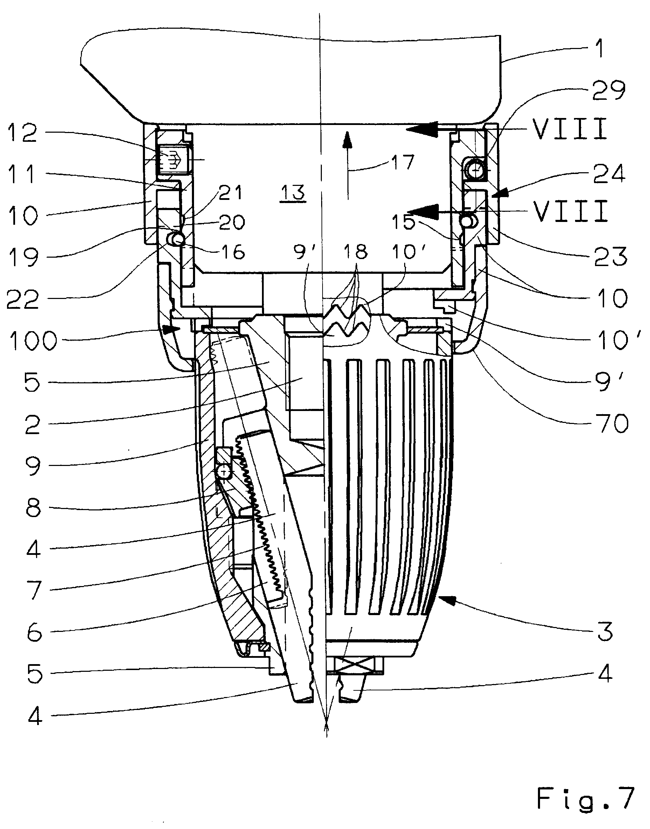

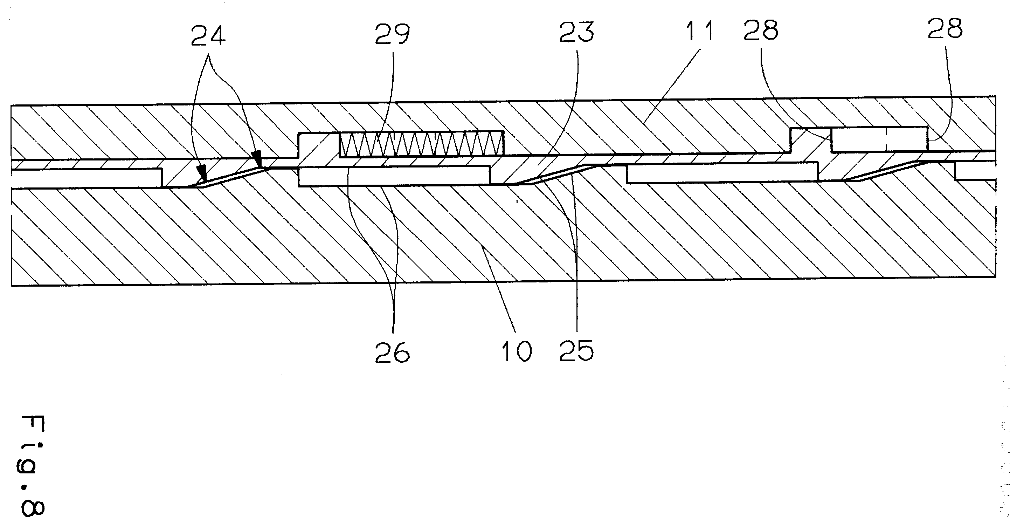

Im Ausführungsbeispiel nach Fig. 1 wird die Kupplungshülse 10 zu ihrer Verstellung in die in der linken Figurenhälfte gezeichnete, dem eingekuppelten Zustand entsprechende Lage durch unmittelbaren Zugriff von Hand verstellt. In den Ausführungsformen nach den Fig. 2 bis 8 dagegen dient zu dieser Verstellung ein am Spindelgehäuse 1, also an der Futterhülse 11 drehbar geführter Stellring 23, der bei seiner Drehbewegung in Richtung des Pfeiles 24' die Kupplungshülse 10 in ihre dem eingekuppelten Zustand entsprechende Lage verschiebt. Der Stellring 23 ist dabei axial unverschiebbar und verschiebt die Kupplungshülse 10 über eine Stellkurve 24. Diese Stellkurve 24 setzt sich aus über den Ringumfang verteilten Rampenstücken 25 und Zwischenstücken 26 zusammen, wobei zwischen je zwei aufeinander folgenden Rampenstücken 25 eines der Zwischenstücke 26 angeordnet ist. Die Rampenstücke 25 verstellen die Kupplungshülse 10 in die dem eingekuppelten Zustand entsprechende Lage, während die Zwischenstücke 26 die Verstellung der Kupplungshülse 10 in ihre dem ausgekuppelten Zustand entsprechende Lage freigeben. Im Ausführungsbeispiel nach den Fig. 2 bis 4 rastet der Stellring 23 nach Verdrehen um die Länge jeweils eines Zwischenstückes 26 und eines Rampenstückes 25 in einer Raststellung 27 an der Futterhülse 11 ein. In dieser Raststellung gibt der Stellring 23 die Verstellung der Kupplungshülse 10 in ihre dem ausgekuppelten Zustand entsprechende Lage frei. Im Ausführungsbeispiel nach den Fig. 7 und 8 ist der Stellring 23 durch Anschlagflächen 28 auf Seiten der Futterhülse 11 auf einen Drehweg von jeweils nur der Länge eines Rampenstücks 25 begrenzt. Eine zwischen dem Stellring 23 und der Futterhülse 11 angeordnete Rückholfeder 29 stellt nach jeder Drehbewegung, welche die Kupplungshülse 10 in ihre dem eingekuppelten Zustand entsprechende Lage verstellt hat, den Stellring 23 in die in Fig. 8 gezeigte Ausgangsstellung zurück, in der der Stellring 23 die Verstellung der Kupplungshülse 10 in ihre dem ausgekuppelten Zustand entsprechende Lage freigibt. Im Ausführungsbeispiel nach den Fig. 5 und 6 sind die Rampenstücke 25 und die Zwischenstücke 26 der Stellkurve 24 von einer in der Wand der Kupplungshülse 10 vorgesehenen Steuernut 30 gebildet, in die am Stellring 23 vorgesehene Steuernocken 31 eingreifen. Im Bereich jedes Zwischenstücks 26 ist die Steuernut 30 mit einer Anschlagfläche 32 ausgestattet, an der der Steuernocken 31 in Drehrichtung (Pfeil 24') des Stellrings 23 zur Anlage kommt, wenn die Kupplungshülse 10 durch das vorangegangene Rampenstück 25 in ihre dem eingekuppelten Zustand entsprechende Lage verstellt worden ist. Im einzelnen zeigt die Fig. 6a den Ausgangszustand, in der die Kupplungshülse 10 sich in ihrer dem ausgekuppelten Zustand entsprechenden Lage befindet, was durch die lediglich schematisch angedeuteten Kupplungsglieder 9', 10' kenntlich gemacht ist, die nicht im Eingriff miteinander stehen. Wird der Stellring 23 in Richtung des Pfeiles 24' bis in die aus Fig. 6b ersichtliche Lage verdreht, wird die Kupplungshülse 10 von den Steuernocken 31 in ihre dem eingekuppelten Zustand entsprechende Lage verschoben, was in Fig. 6b links daran erkennbar ist, daß der Federring 16 in der den Rastsitz bildenden Ringnut 15 eingerastet ist. Der Steuernocken 31 ist dabei an der Anschlagfläche 32 der gegen Mitdrehen gesicherten Kupplungshülse 10 zur Anlage gekommen, so daß ein weiteres Verdrehen des Stellrings 23 in Richtung des Pfeiles 24' ausgeschlossen ist. Wird nun die Bohrspindel 2 zum Spannen oder Lösen des Bohrfutters 3 angetrieben, wird durch das sich zwischen der Spannhülse 9 und der Kupplunghülse 10 aufbauende Drehmoment die Kupplungshülse 10 über die Flankenflächen 9', 10' axial soweit zurückgedrückt, daß der Federring 16 gerade aus der Ringnut 15 ausrastet, noch ehe die einander zugeordneten Kupplungsglieder 9', 10' vollständig außer Eingriff gelangt sind, wie dies Fig. 6c zeigt. Der Federring 16 sorgt dann auf der sich konisch verjüngenden Ringfläche 20 zur abschließenden Verstellung der Kupplungshülse 10 in ihre dem ausgekuppelten Zustand entsprechende Lage. Ersichtlich ist nun der Stellring 23 gegen erneutes Verdrehen in Richtung des Pfeiles 24' freigegeben, so daß wieder die Möglichkeit besteht, durch entsprechendes Drehen des Stellrings gemäß Fig. 6a die Kupplungshülse 10 erneut in ihre dem eingekuppelten Zustand entsprechende Lage zu verstellen.

Im übrigen ist zwischen der Futterhülse 11 und dem Stellring 23 ein die Drehstellung des Stellrings 23 relativ zum Spindelgehäuse 1 erfassender Stellungsmelder 57 vorgesehen. Er umfaßt einen berührungslos arbeitenden induktiven Näherungsschalter 58 in einem Bund 60 der Futterhülse 11 und am Stellring 23 Stücke eines Indikatorstreifens 59, die in Fig. 6 durch Kreuzschraffur hervorgehoben sind. Der Stellungsmelder 57 steuert über eine nicht gezeichnete, in einem Leitungskanal 63 verlegte elektrische Leitung eine den Antrieb der Bohrspindel 2 aus- und einschaltende, in der Zeichnung nicht dargestellte Schalteinrichtung, die beispielsweise in Serie mit einem von Hand zu betätigenden Betriebsschalter für den Motor des Spindelantriebs geschaltet ist. Ist somit die Schalteinrichtung durch den Näherungsschalter 58 eingeschaltet, kann die Bohrspindel 2 in Gang gesetzt werden. Wird aber die Schalteinrichtung durch den Näherungsschalter 58 ausgeschaltet, bleibt die Bohrspindel 2 stehen und kann nicht eher wieder angetrieben werden, bis die Schalteinrichtung wieder eingeschaltet ist. Befindet sich eines der Stücke des Indikatorstreifens 59 radial gegenüber dem Meßpunkt 61 des Näherungsschalters 58, ist der Näherungsschalter aktiviert und die Schalteinrichtung eingeschaltet. Steht aber eine der zwischen den Stücken des Indikatorstreifens 59 gebildeten Lücken 62 dem Meßpunkt 61 gegenüber, ist der Näherungsschalter 58 inaktiviert und die Schalteinrichtung ausgeschaltet. In der in Fig. 6a ausgezogen gezeichneten Stellung des Steuernockens 31 befindet sich ein Stück des Indikatorstreifens 59 gegenüber dem Meßpunkt 61, so daß die Bohrspindel 2 eingeschaltet werden kann. Wird der Stellring 23 in Fig. 6a etwas in Pfeilrichtung 24' verdreht, so daß der Steuernocken 31 die gestrichelt dargestellte Lage einnimmt, befindet sich eine der Lücken 62 gegenüber dem Meßpunkt 61 und entsprechend wird der Spindelantrieb ausgeschaltet, und zwar über den dem Rampenstück 25 entsprechenden Drehweg des Stellrings 23 hinweg, längs dem die Kupplungshülse 10 aus ihrer dem ausgekuppelten Zustand entsprechende Lage in die dem eingekuppelten Zustand entsprechende Lage verschoben wird. In Fig. 6b ist diese Einkupplung erfolgt. Dem Meßpunkt 61 steht jetzt wieder ein Stück des Indikatorstreifens 59 gegenüber, so daß die Bohrspindel 2 wieder in Gang gesetzt werden kann. Da sich die Rampenstücke 25 über den Umfang der Kupplungshülse 10 wiederholen, wiederholen sich entsprechend die Lücken 62 über den Umfang des Stellrings 23.

Eine entsprechende Steuerung des Bohrspindelantriebs in Abhängigkeit von der Drehstellung des Stellrings 23 ist selbstverständlich auch im Fall der Ausführungsbeispiele nach den Fig. 2 bis 4 und 7 bis 8 möglich, was aber keiner nochmaligen Beschreibung bedarf.

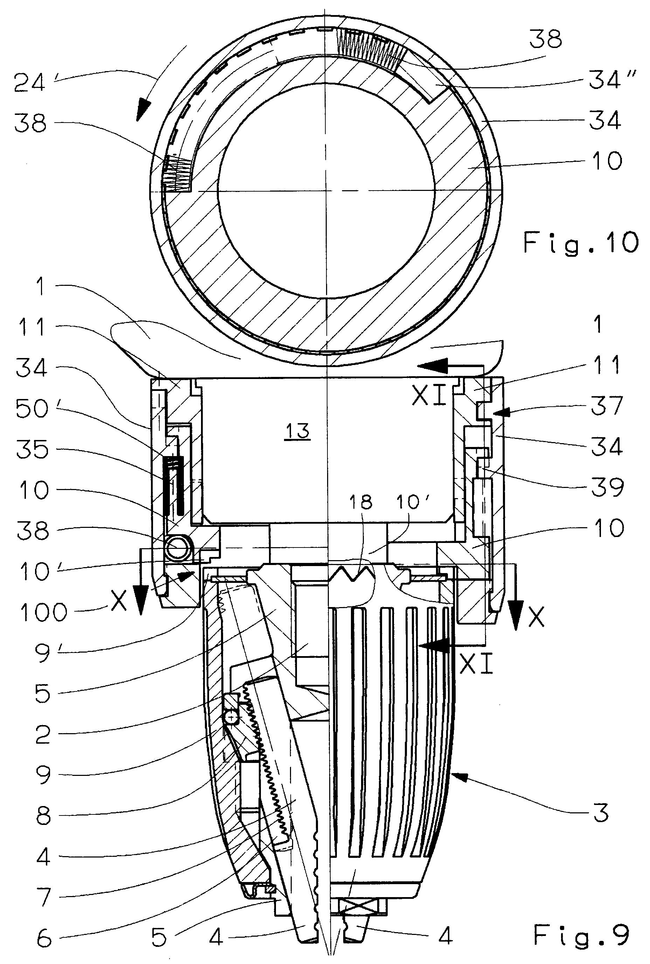

Im Ausführungsbeispiel nach den Fig. 9 bis 11 ist die Kupplungshülse 10 ebenfalls unverdrehbar an der Futterhülse 11 geführt, was durch den bei 33 gestrichelt angedeuteten Führungseingriff sichergestellt ist. Jedoch ist nun die Sperreinrichtung auf andere Weise als durch einen Rastsitz gebildet. Dazu ist die Kupplungshülse 10 zwischen zwei axial auseinander liegenden Begrenzungen 34', 34'' an einem Betätigungsring 34 verschiebbar. Durch die Kupplungsfeder 50 wird die Kupplungshülse 10 in Anlage an der zum Bohrfutter 3 hin liegenden Begrenzung 34'' gehalten. Dabei ist der Verschiebungsweg zwischen den Begrenzungen 34', 34'' mindestens gleich dem die Sperreinrichtung öffnenden axialen Verstellweg der Kupplungshülse 10, und dieser axiale Verstellweg wiederum ist gleich dem Federweg, um den die Kupplungsfeder 50 durch die axialen Kraftkomponenten spannbar ist, welche die Spannhülse 9 bei der für die Öffnung der Sperreinrichtung vorgegebenen Drehmomentgröße über die Flankenflächen 9,, 10' auf die Kupplungshülse 10 ausübt. Die Kupplungsfeder 50 ist von mehreren längs des Umfangs der Kupplungshülse 10 angeordneten Federgliedern 50' in Form von Schraubendruckfedern gebildet, die jeweils auf einem an der Kupplungshülse 10 angeordneten Zapfen 35 geführt sind. Die Federglieder 50' sind zwischen der Kupplungshülse 10 einerseits und dem Betätigungsring 34, nämlich an der Begrenzung 34' andererseits abgestützt und vorgespannt.

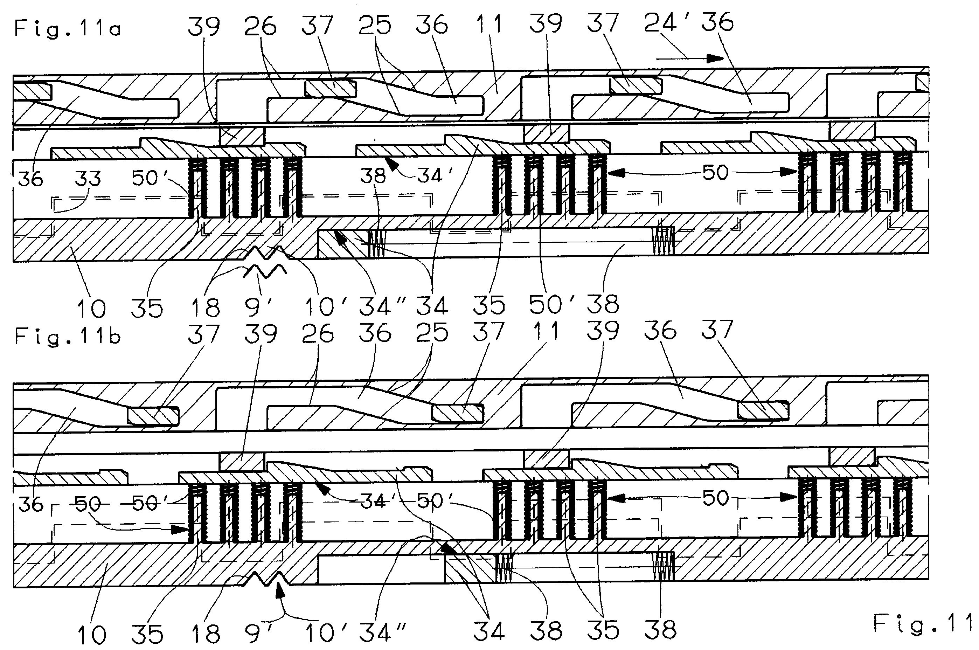

Ferner ist der Betätigungsring 34 gegenüber dem Spindelgehäuse 1, im Ausführungsbeispiel also an der Futterhülse 11 zwischen einer Ausgangsstellung (Fig. 11a) und einer Kupplungsstellung (Fig. 11b) verdrehbar und bei dieser Drehung in bestimmter Weise axial verschiebbar, wozu der Betätigungsring 34 an einer Steuerkurve zwangsgeführt ist, die von Steuernuten 36 in der Futterhülse 11 gebildet ist, in die am Betätigungsring 34 vorgesehene Steuernocken 37 eingreifen. Im Ergebnis verstellt der Betätigungsring 34 bei seiner Verschiebung die Kupplungshülse 10 zwischen ihren dem eingekuppelten Zustand und dem ausgekuppelten Zustand der Kupplungseinrichtung entsprechenden Lagen, wobei die Ausgangsstellung des Betätigungsrings 34 der Lage der Kupplungshülse 10 im ausgekuppelten Zustand, die Kupplungsstellung des Betätigungsring 34 der Lage der Kupplungshülse 10 im eingekuppelten Zustand der Kupplungseinrichtung 100 entspricht, wie dies aus der gegenseitigen Stellung der jeweils bei 9', 10' angedeuteten Kupplungsglieder ersichtlich ist. Weiter ist der Betätigungsring 34 in Umfangsrichtung mit der Kupplungshülse 10 durch die Entkupplungsfeder 38 verbunden, die sich beim Verdrehen des Betätigungsringes 34 aus der Ausgangsstellung in die Kupplungsstellung spannt und im Ausführungsbeispiel als Druckfeder ausgebildet ist. Der Betätigungsring 34 ist in der Kupplungsstellung (Fig. 11b) gegen die Kraft der Entkupplungsfeder 38 an der Kupplungshülse 10 in einem Anschlag 39 abgestützt. Dieser Anschlag 39 ist so ausgebildet, daß er durch Verschieben der Kupplungshülse 10 um ihren die Sperreinrichtung öffnenden axialen Verstellweg aufgehoben wird. Der Betätigungsring 34 kann sich dann in Fig. 11b unter dem entsprechend nach oben angehobenen Anschlag 39 der Kupplungshülse 10 hindurch nach links in die Ausgangsstellung nach Fig. 11a zurückstellen, wobei die Kupplungshülse 10 über die Begrenzungen 34'' des Betätigungsringes 34 axial in ihre dem ausgekuppelten Zustand entsprechende Lage mitgenommen wird. - Im übrigen besteht auch in diesem Ausführungsbeispiel die Möglichkeit, daß sich der Antrieb der Bohrspindel 2 abschaltet, wenn die Kupplungshülse 10 aus der ausgekuppelten Stellung in die eingekuppelte Stellung verschoben wird. Dazu ist lediglich die Drehstellung des Betätigungsrings 34 in sinngemäß gleicher Weise zu erfassen, wie dies für den Stellring 23 schon im einzelnen beschrieben worden ist, so daß darauf hier nicht nochmals näher eingegangen zu werden braucht.

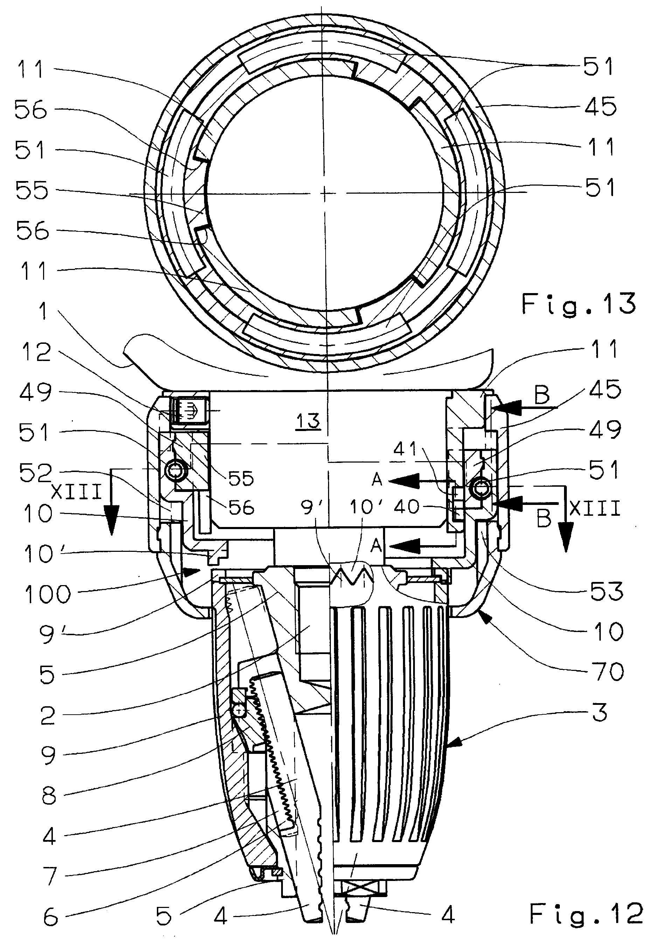

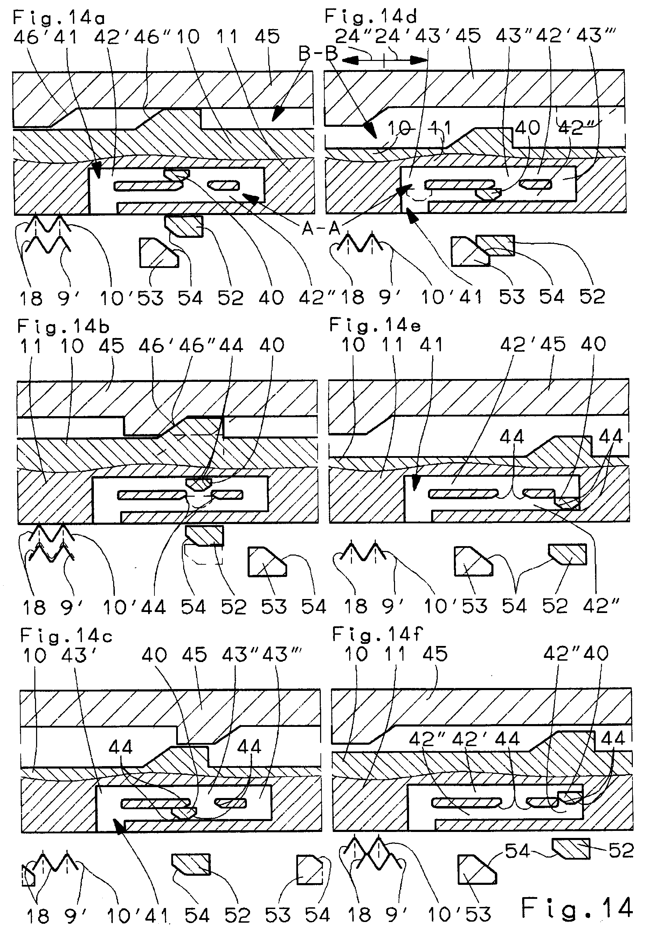

Im Ausführungsbeispiel nach den Fig. 12 bis 14 ist die Kupplungshülse 10 nicht mehr undrehbar an der Futterhülse 11 geführt, vielmehr ist hier die Kupplungshülse 10 relativ zum Spindelgehäuse 1 gegen die in Umfangsrichtung wirkende Kraft der Kupplungsfeder 51 begrenzt verdrehbar. Dabei ist die Kupplungshülse 10 mit einem Steuervorsprung 40 in einer auf Seiten des Spindelgehäuses 1, nämlich in der Wand der Futterhülse 11 vorgesehenen Steuernut 41 geführt. Diese Steuernut 41 besitzt zwei in Umfangsrichtung axial nebeneinander verlaufende Nutabschnitte 42', 42'' und drei diese Nutabschnitte 42', 42'' verbindende, axial verlaufende Nutabschnitte 43', 43'', 43'''. Der axiale Abstand zwischen den in Umfangsrichtung verlaufenden beiden Nutabschnitten 42', 42'' ist gleich dem axialen Verstellweg der Kupplungshülse 10 zwischen ihren dem ausgekuppelten und dem eingekuppelten Zustand entsprechenden beiden Lagen. Der Umfangsabstand zwischen jeweils zwei aufeinander folgenden, axial verlaufenden Nutabschnitten 43', 43'' bzw. 43'', 43''' ist im wesentlichen gleich dem Federweg, um den sich beim Schließen bzw. Öffnen des Bohrfutters die Kupplungsfeder 51 aus ihrem Ausgangszustand (Fig. 14a) unter der für die Öffnung der Sperreinrichtung vorgegebenen Drehmomentgröße jeweils in der einen oder anderen Drehrichtung spannt. Dabei ist der mittlere axial verlaufende Nutabschnitt 43'' gegenüber der dem Ausgangszustand der Kupplungsfeder 51 entsprechenden Stellung des Steuervorsprungs 40 (Fig. 14a) in Umfangsrichtung etwas versetzt, so daß der dieser Versetzung entsprechende Federweg der Kupplungsfeder 51 für diese eine Federvorspannung ergibt, wenn der Steuervorsprung 40 durch entsprechende Verdrehung der Kupplungshülse 10 sich an der Stelle des mittleren, axial verlaufenden Nutabschnitts 43'' (Fig. 14b) befindet. Am Spindelgehäuse 1, im Ausführungsbeispiel also an der Futterhülse 11, ist eine koaxiale, drehbar geführte und axial unverschiebbare Stellhülse 45 angeordnet. Sie nimmt beim Verdrehen von Hand in Richtung des Pfeiles 24' über Steuerschrägen 46', 46'' die Kupplungshülse 10 zunächst in deren dem ausgekuppelten Zustand entsprechenden axialen Lage aus ihrer dem Ausgangszustand der Kupplungsfeder 51 entsprechenden Drehstellung (Fig. 14a) in Drehrichtung mit und verstellt dann in Verbindung mit der Kraft der inzwischen vorgespannten Kupplungsfeder 51 die Kupplungshülse 10 in die dem eingekuppelten Zustand entsprechende Lage, wenn der Steuervorsprung 40 den mittleren axial verlaufenden Nutabschnitt 43'' erreicht, wobei sich die Kupplungsfeder 51 wieder vollständig entspannt, so daß der in Fig. 14c dargestellte Zustand erreicht wird. Wird die Stellhülse 45 weiter in Richtung des Pfeiles 24' verdreht, so gibt die Steuerschräge 46' die Kupplungshülse 10 wieder so weit frei, daß letztere sich zu gegebener Zeit axial in ihre Ausgangsstellung, die dem ausgekuppelten Zustand entspricht, zurückstellen kann. Dies geschieht, ausgehend von dem aus Fig. 14d ersichtlichen Zustand, bei sich drehendem Bohrfutter durch Mitnahme der Kupplungshülse 10 gegenüber der Futterhülse 11 entweder in Richtung des Pfeiles 24', entsprechend einem Spannen des Futters, oder in Richtung des Pfeiles 24'', entsprechend einem Lösen des Futters. Dreht sich die Kupplungshülse 10 beispielsweise in Richtung des Pfeiles 24' im Sinne eines Spannens des Futters, wird die Kupplungsfeder 51 gespannt, bis der Steuervorsprung 40 am rechten Ende des in der Zeichnung unteren in Umfangsrichtung verlaufenden Nutabschnittes 42'' anschlägt (Fig. 14e). Die hierbei erreichte Spannung der Kupplungsfeder 51 bestimmt das maximale Drehmoment, mit dem das Futter gespannt werden kann. Ein weiteres Verdrehen der Kupplungshülse 10 in Richtung des Pfeiles 24' ist nicht mehr möglich, so daß die Kupplungshülse 10 jetzt über die geneigten Flankenflächen 18 der Kupplungsvorsprünge 9', 10' in Fig. 14e durch den rechten axial verlaufenden Nutabschnitt 43''' nach oben in die aus Fig. 14f ersichtliche Lage verschoben wird, wobei sich die Kupplungseinrichtung 100 öffnet. Aus dieser Lage gelangt der Steuervorsprung 40 unter der Kraft der gespannten Kupplungsfeder 51 vollständig in den in der Zeichnung oberen, in Umfangsrichtung verlaufenden Nutabschnitt 42' und in diesem zurück in die Ausgangsstellung gemäß Fig. 14a. Soll dagegen aus der Stellung in Fig. 14d das Bohrfutter gelöst werden, erfolgt die Verdrehung der Kupplungshülse 10 in Richtung des Pfeiles 24'', wobei in dieser Richtung die Kupplungsfeder 51 wiederum gespannt wird, bis der Steuervorsprung 40 in den linken, axial verlaufenden Nutabschnitt 43' eintritt, sich dort entsprechend axial aufwärts bewegt und schließlich im oberen, in Umfangsrichtung verlaufenden Nutabschnitt 42' wieder in die Ausgangsstellung gemäß Fig. 14a zurückkehrt. Die Umfangsabstände zwischen dem mittleren axial verlaufenden Nutabschnitt 43'' einerseits und den beiden links und rechts davon befindlichen axial verlaufenden Nutabschnitten 43', 43''' können verschieden sein, so daß in der einen Drehrichtung der Kupplungshülse 10 die Kupplungsfeder 51 mehr oder weniger gespannt wird als in der anderen Drehrichtung, was die Möglichkeit eröffnet, beispielsweise für das Spannen des Bohrfutters geringere Drehmomente als für das Lösen des Bohrfutters entstehen zu lassen, ohne daß dabei die Flankenwinkel der in beiden Drehrichtungen jeweils zur Anlage kommenden Flankenflächen 18 unterschiedlich sein müssen. Um den Übergang des Steuervorsprungs 40 zwischen den in Umfangsrichtung verlaufenden Nutabschnitten 42', 42'' und den axial verlaufenden Nutabschnitten 43', 43'', 43''' zu erleichtern, sind an den Wänden der Steuernut 41 und am Steuervorsprung 40 Leitschrägen 44 ausgebildet. Die Kupplungsfeder 51 ist von mehreren, nämlich vier in Umfangsrichtung verlaufenden Schraubendruckfedern gebildet, deren beide Enden jeweils sowohl an der Kupplungshülse 10 als auch an einer Stützhülse 49 abgestützt sind, so daß die Schraubendruckfedern beim gegenseitigen Verdrehen von Kupplungshülse 10 und Stützhülse 49 in jedem Fall gespannt werden, unabhängig davon, in welcher Richtung, Pfeil 24' oder 24'', die Verdrehung erfolgt. Die Stützhülse 49 ist mit Längsstegen 55 unverdrehbar, aber axial frei verschieblich in Längsschlitzen 56 der Futterhülse 11 geführt. Auf eine solche Stützhülse 49 kann verzichtet werden, wenn im Fall einer anderen Federausbildung für die Kupplungsfeder 51 Federspannungen auch in Axialrichtung in Kauf genommen werden können. Statt die Kupplungsfeder in der beschriebenen Weise als Schraubendruckfedern auszubilden, besteht nämlich zum Beispiel auch die Möglichkeit, die Kupplungsfeder als eine ein- oder mehrgängige in Umfangsrichtung verlaufende und ebenfalls in beiden Drehrichtungen spannbare Radialfeder auszubilden. In jedem Fall wirkt dabei die Kupplungsfeder 51 außer als Kupplungsfeder auch als Entkupplungsfeder, denn sie bewirkt aus dem gespannten Zustand heraus die völlige Rückstellung der Kupplungshülse 10 in ihre dem ausgekuppelten Zustand entsprechende Lage.

In dieser Ausführungsform kann ein einmal hergestellter eingekuppelter Zustand auch nur von Hand ohne eine von der Bohrspindel bewirkte Drehung des Bohrfutters und entsprechende Drehmitnahme der Kupplungshülse 10 aufgehoben werden. Dazu trägt die Kupplungshülse 10 einen Lösevorsprung 52 und die Stellhülse 45 einen Stellnocken 53. Beide sind so einander räumlich zugeordnet, daß sie sich in der dem ausgekuppelten Zustand entsprechenden Lage der Kupplungshülse 10 (Fig. 14a, 14b) in Umfangsrichtung ohne Berührung aneinander vorbei bewegen können, wie dies der Vergleich der Fig. 14a und 14b erkennen läßt. Verstellt sich aber die Kupplungshülse 10 in ihre dem eingekuppelten Zustand entsprechende Lage (in Fig. 14b gestrichelt angedeutete Stellung des Steuervorsprungs 40 und des Lösevorsprungs 52) gelangt der Lösevorsprung 52 in die Bewegungsbahn des Stellnockens 53, so daß die beiden aneinander zum Anschlag kommen können, wenn Verdrehungen zwischen der Stellhülse 45 und der Kupplungshülse 10 stattfinden. Wie die Fig. 14d zeigt, erfolgt der Anschlag in derart gegen die Spindelachse geneigten Anschlagflächen 54, daß der Stellnocken 53 den Lösevorsprung 52 mit einer in Fig. 14d nach oben gerichteten axialen Kraftkomponente beaufschlagt, also in derjenigen Richtung, in der die Verschiebung der Kupplungshülse 10 aus ihrer dem eingekuppelten Zustand entsprechenden Lage durch einen der drei axial verlaufenden Nutabschnitte 43', 43'' oder 43''' hindurch in ihre dem eingekuppelten Zustand entsprechende Lage stattfindet. Wird daher in Fig. 14d die Stellhülse 45 von Hand weiter nach rechts (Pfeilrichtung 24') gedreht, wird die Kupplungshülse 10 durch den Anschlag des Stellnockens 53 am Lösevorsprung 52 zunächst mitgenommen, bis sich der Lösevorsprung 52 im mittleren axialen Nutabschnitt 43'' befindet, in dem er dann vom Stellnocken 53 aufwärts in die aus Fig. 14b ersichtliche Stellung gedrückt und dabei die Kupplungshülse 10 in ihre dem ausgekuppelten Zustand entsprechende Lage verstellt wird. - In dem aus Fig. 14d ersichtlichen Zustand kann aber nach wie vor die Kupplungshülse 10 nach links (Pfeilrichtung 24'') verdreht werden, nämlich durch die Mitnahme durch das Bohrfutter 3 bei entsprechend eingeschaltetem Spindelantrieb. In diesem Fall wird vom Lösevorsprung 52 über die Anschlagflächen 54 und den Stellnocken 53 die Stellhülse 45 mitgenommen, bis sich, in Fig. 14d gestrichelt angedeutet, der Steuervorsprung 40 im linken axial verlaufenden Nutabschnitt 43' befindet, in dem er, und mit ihm die Kupplungshülse 10 durch die an der Anschlagfläche 54 erzeugte axiale Kraftkomponente aufwärts geschoben und dabei die Kupplungshülse in ihre dem ausgekuppelten Zustand entsprechende Lage verstellt wird. Da die Steuerschräge 46' an der Stellhülse 45 zu mehreren in gleichmäßiger Verteilung über den Umfang angeordnet ist, ist auch der Stellnocken 53 entsprechend mehrmals an der Stellhülse 45 vorgesehen.

Im übrigen besteht auch bei dieser Ausführungsform die schon mehrfach angesprochene Möglichkeit für eine Abschaltung des Bohrspindelantriebs, wenn sich die Kupplungshülse 10 aus dem ausgekuppelten in den eingekuppelten Zustand verstellt. Dafür ist die Drehstellung der Stellhülse 45 in sinngemäß gleicher Weise als Schaltkriterium verwendbar, wie dies für den Stellring 23 anhand des Ausführungsbeispiels nach den Fig. 5 und 6 schon ausführlich erläutert worden ist, so daß auf die dortigen Ausführungen wegen Einzelheiten verwiesen werden kann.

Im übrigen kann die Kupplungshülse 10 mit einem vorderen Schürzenteil 70 die Kupplungsglieder 9', 10' sowie den rückwärtigen Randbereich der Spannhülse 10 axial übergreifen. In diesem Schürzenteil 70 kann die Kupplungshülse 10 mit randseitig offenen Schlitzen 71 versehen sein, wie dies in Fig. 1 in der rechten Figurenhälfte gezeigt ist. Diese Schlitze 71 ermöglichen es, das Schürzenteil 70 von Hand radial etwas zusammenzudrücken und dadurch auf die Spannhülse 9 und das Bohrfutter 3 insgesamt eine Bremswirkung auszuüben.

## Patentansprüche

1. Bohrvorrichtung mit einer antreibbaren, in einem Spindelgehäuse (1) drehbar gelagerten Bohrspindel (2) und mit einem an das Spindelende angeschlossenen Bohrfutter (3) mit Spannbacken (4) zur Aufnahme eines Bohrwerkzeugs, wobei das Bohrfutter einen mit der Bohrspindel koaxialen und drehfest verbundenen Futterkörper (5) und zum Verstellen der Spannbacken (4) eine koaxiale und relativ zum Futterkörper (5) verdrehbare Spannhülse (9) aufweist, und wobei zum Spannen und Lösen des Bohrfutters (3) durch die Bohrspindel (2) zwischen dem Spindelgehäuse (1) und der Spannhülse (9) eine Kupplungseinrichtung (100) vorgesehen ist, welche eine am Spindelgehäuse (1) gegen Mitdrehen mit dem Bohrfutter (3) gehaltene, relativ zum Bohrfutter axial verstellbare Kupplungshülse (10) umfaßt, die in gegen das Bohrfutter (3) vorgestellter, dem eingekuppelten Zustand der Kupplungseinrichtung (100) entsprechender Lage die Spannhülse (9) in Umfangsrichtung kraftschlüssig mit dem Spindelgehäuse (1) verbindet und durch eine Entkupplungsfeder in eine vom Bohrfutter zurückgestellte, dem ausgekuppelten Zustand der Kupplungseinrichtung (100) entsprechende Lage verstellbar ist, in der keine Kupplungsverbindung mit der Spannhülse (9) besteht, dadurch gekennzeichnet, daß die Kupplungshülse (10) durch eine Sperreinrichtung im eingekuppelten Zustand gehalten ist und daß die Sperreinrichtung sich öffnet und die Verstellung der Kupplungshülse (10) in den ausgekuppelten Zustand freigibt, wenn das im eingekuppelten Zustand zwischen der Spannhülse (9) und der Kupplungshülse (10) übertragene Drehmoment eine vorgegebene Größe überschreitet.

2. Bohrvorrichtung nach Anspruch 1, dadurch gekennzeichnet, daß an der Kupplungshülse (10) und der Spannhülse (9) einander zugeordnete Kupplungsglieder (9', 10') vorgesehen sind, die im eingekuppelten Zustand der Kupplungseinrichtung (100) durch eine Kupplungsfeder im gegenseitigen Kupplungseingriff gehalten sind und in Umfangsrichtung aneinander mit Flankenflächen (18) anliegen, die gegen die Spindelachse so geneigt sind, daß bei der für die Öffnung der Sperreinrichtung vorgegebenen Drehmomentgröße die Spannhülse (9) über die Flankenflächen (18) auf die Kupplungshülse (10) axial gerichtete Kraftkomponenten ausübt, welche die Sperreinrichtung öffnen.

3. Bohrvorrichtung nach Anspruch 2, dadurch gekennzeichnet, daß die Kupplungsglieder (9', 10') sägezahnartig mit von der Zahnbrust gebildeter steilerer Flankenfläche und vom Zahnrücken gebildeter flacherer Flankenfläche geformt sind, wobei an der Spannhülse (9) in ihrem dem Öffnen des Bohrfutters entsprechenden Drehsinn die Zahnbrust jedes Kupplungsgliedes (9') seinem Zahnrücken voranläuft.

4. Bohrvorrichtung nach Anspruch 2 oder 3, dadurch gekennzeichnet, daß die Sperreinrichtung durch einen axialen Verstellweg der Kupplungshülse (10) geöffnet wird, der höchstens gleich ist der in axialer Richtung maximalen gegenseitigen Überlappung der Kupplungsglieder (9', 10') im eingekuppelten Zustand der Kupplungseinrichtung (100).

5. Bohrvorrichtung nach Anspruch 4, dadurch gekennzeichnet, daß die Kupplungshülse (10) undrehbar am Spindelgehäuse (1) geführt ist.

6. Bohrvorrichtung nach Anspruch 5, dadurch gekennzeichnet, daß die Sperreinrichtung als Rastvorrichtung mit einer Ringnut (15) als Rastsitz und einem darin einrastenden Federring (16) als Rastfeder und Rastglied ausgebildet ist, wobei der Federring (16) als Kupplungsfeder dient und im eingerasteten Zustand die Kupplungshülse (10) in ihrer dem eingekuppelten Zustand der Kupplungseinrichtung (100) entsprechenden Lage hält sowie unter den axialen Kraftkomponenten aus der Ringnut (15) ausrastet, welche die Spannhülse (9) bei der für die Öffnung der Sperreinrichtung vorgegebenen Drehmomentgröße über die Flankenflächen (18) auf die Kupplungshülse (10) ausübt.

7. Bohrvorrichtung nach Anspruch 6, dadurch gekennzeichnet, daß in der dem Auskuppeln der Kupplungseinrichtung (100) entsprechenden Verschiebungsrichtung der Kupplungshülse (10) sich an den Rand (19) der Ringnut (15) eine sich etwa konisch verjüngende Ringfläche (20) anschließt, auf der der aus der Ringnut (15) ausgerastete Federring (16) in Folge seiner Federspannung in Verjüngungsrichtung verrutscht, wobei der Federring (16) als Entkupplungsfeder dient und die Kupplungshülse (10) in ihre dem ausgekuppelten Zustand entsprechende Lage verstellt.

8. Bohrvorrichtung nach den Ansprüchen 6 und 7, dadurch gekennzeichnet, daß die Ringnut (15) und die Ringfläche (20) auf der Seite des Spindelgehäuses (1) ausgebildet sind und der Federring (16) an der Kupplungshülse (10) gehalten ist.

9. Bohrvorrichtung nach einem der Ansprüche 6 bis 8, dadurch gekennzeichnet, daß am Spindelgehäuse (1) ein drehbar geführter Stellring (23) angeordnet ist, der bei einer Drehbewegung die Kupplungshülse (10) in ihre dem eingekuppelten Zustand entsprechende Lage verschiebt.

10. Bohrvorrichtung nach Anspruch 9, dadurch gekennzeichnet, daß der Stellring (23) axial unverschieblich ist und beim Drehen die Kupplungshülse (10) über eine Stellkurve (24) verschiebt.

11. Bohrvorrichtung nach Anspruch 10, dadurch gekennzeichnet, daß die Stellkurve (24) über den Ringumfang verteilte, jeweils auf ein Zwischenstück (26) folgende Rampenstücke (25) aufweist, wobei die Rampenstücke (25) die Kupplungshülse (10) in die dem eingekuppelten Zustand entsprechende Lage verstellen und die Zwischenstücke (26) die Verstellung der Kupplungshülse (10) in ihre dem ausgekuppelten Zustand entsprechende Lage freigeben.

12. Bohrvorrichtung nach Anspruch 11, dadurch gekennzeichnet, daß der Stellring (23) nach Verdrehen um die Länge eines Zwischenstücks (26) und eines Rampenstücks (25) in einer Raststellung (27) am Spindelgehäuse (1) einrastet, in der die Verstellung der Kupplungshülse (10) in ihre dem ausgekuppelten Zustand entsprechende Lage freigegeben ist.

13. Bohrvorrichtung nach Anspruch 11, dadurch gekennzeichnet, daß der Stellring (23) durch Anschlagflächen (28) auf Seiten des Spindelgehäuses (1) auf einen Drehweg von jeweils nur der Länge eines Rampenstücks (25) begrenzt ist und daß eine Rückholfeder (29) vorgesehen ist, die nach jeder Drehbewegung, welche die Kupplungshülse (10) in ihre dem eingekuppelten Zustand entsprechende Lage verstellt, den Stellring (23) in die Ausgangsstellung zurückdreht, in der die Verstellung der Kupplungshülse (10) in ihre dem ausgekuppelten Zustand entsprechende Lage durch den Stellring (23) freigegeben ist.

14. Bohrvorrichtung nach Anspruch 11, dadurch gekennzeichnet, daß die Rampenstücke (25) und die Zwischenstücke (26) von einer an der Wand der Kupplungshülse (10) vorgesehenen Steuernut (30) gebildet sind, die am Stellring (23) vorgesehene Steuernocken (31) aufnimmt und im Bereich jedes Zwischenstücks (26) eine Anschlagfläche (32) aufweist, an der jeweils ein Steuernocken (31) in Drehrichtung des Stellrings (23) zur Anlage kommt, wenn die Kupplungshülse (10) durch das vorangegangene Rampenstück (25) in ihre dem eingekuppelten Zustand entsprechende Lage verstellt ist.

15. Bohrvorrichtung nach Anspruch 5, dadurch gekennzeichnet, daß die Kupplungshülse (10) zwischen zwei axial auseinander liegenden Begrenzungen (34', 34'') an einem Betätigungsring (34) verschiebbar und durch die Kupplungsfeder (50) in Anlage an der zum Bohrfutter (3) hin liegenden Begrenzung (34'') gehalten ist, wobei der Verschiebungsweg zwischen den Begrenzungen (34', 34'') mindestens gleich dem die Sperreinrichtung öffnenden axialen Verstellweg der Kupplungshülse (10) und dieser gleich dem Federweg ist, um den die Kupplungsfeder (50) durch die axialen Kraftkomponenten spannbar ist, welche die Spannhülse (9) bei der für die Öffnung der Sperreinrichtung vorgegebenen Drehmomentgröße über die Flankenflächen (18) auf die Kupplungshülse (10) ausübt, daß ferner der Betätigungsring (34) am Spindelgehäuse (1) zwischen einer Ausgangsstellung und einer Kupplungsstellung verdrehbar und dabei an einer Steuerkurve zwangsgeführt axial verschiebbar ist, so daß der Betätigungsring (34) bei seiner Verschiebung die Kupplungshülse (10) zwischen ihren dem eingekuppelten Zustand und dem ausgekuppelten Zustand der Kupplungseinrichtung (100) entsprechenden Lagen verstellt, wobei die Ausgangsstellung des Betätigungsrings (34) der Lage der Kupplungshülse (10) im ausgekuppelten Zustand, die Kupplungsstellung ihrer Lage im eingekuppelten Zustand der Kupplungseinrichtung (100) entspricht, und wobei der Betätigungsring (34) in Umfangsrichtung mit der Kupplungshülse (10) durch die Entkupplungsfeder (38) verbunden ist, die sich beim Verdrehen des Betätigungsrings (34) aus der Ausgangsstellung in die Kupplungsstellung spannt, und daß der Betätigungsring (34) in der Kupplungsstellung gegen die Kraft der Entkupplungsfeder (38) an der Kupplungshülse (10) in einem Anschlag (39) abgestützt ist, der durch Verschieben der Kupplungshülse (10) um ihren die Sperreinrichtung öffnenden axialen Verstellweg aufgehoben wird und dann die Rückdrehung des Betätigungsrings (34) in die Ausgangsstellung durch die Entkupplungsfeder (38) freigibt.

16. Bohrvorrichtung nach Anspruch 15, dadurch gekennzeichnet, daß die Kupplungsfeder (50) von mehreren längs des Umfangs der Kupplungshülse (10) angeordneten Federgliedern (50') gebildet ist, die zwischen der Kupplungshülse (10) einerseits und dem Betätigungsring (34) andererseits angeordnet und vorgespannt sind.

17. Bohrvorrichtung nach Anspruch 15 oder 16, dadurch gekennzeichnet, daß die Steuerkurve für den Betätigungsring (34) durch Steuernuten (36) auf Seiten des Spindelgehäuses (1) gebildet und der Betätigungsring (34) mit in die Steuernuten (36) greifenden Steuernocken (37) versehen ist.

18. Bohrvorrichtung nach Anspruch 4, dadurch gekennzeichnet, daß die relativ zum Spindelgehäuse (1) gegen die Kraft der Kupplungsfeder (51) verdrehbare Kupplungshülse (10) mit einem Steuervorsprung (40) in einer auf Seiten des Spindelgehäuses (1) vorgesehenen Steuernut (41) geführt ist, die zwei in Umfangsrichtung axial nebeneinander verlaufende Nutabschnitte (42', 42'') und drei diese Nutabschnitte verbindende axial verlaufende Nutabschnitte (43', 43'', 43''') aufweist, daß der axiale Abstand zwischen den in Umfangsrichtung verlaufenden beiden Nutabschnitten (42', 42'') gleich dem axialen Verstellweg der Kupplungshülse (10) zwischen ihren dem ausgekuppelten und dem eingekuppelten Zustand entsprechenden beiden Lagen und der Umfangsabstand zwischen jeweils zwei aufeinander folgenden, axial verlaufenden Nutabschnitten (43', 43'' bzw. 43'', 43''') im wesentlichen gleich dem Federweg ist, um den sich beim Schließen bzw. Öffnen des Bohrfutters (3) die Kupplungsfeder (51) aus ihrem Ausgangszustand unter der für die Öffnung der Sperreinrichtung vorgegebenen Drehmomentgröße jeweils in der einen oder anderen Drehrichtung spannt, wobei der mittlere axial verlaufende Nutabschnitt (43'') gegenüber der dem Ausgangszustand der Kupplungsfeder (51) entsprechenden Stellung des Steuervorsprungs (40) in Umfangsrichtung etwas versetzt ist, so daß der dieser Versetzung entsprechende Federweg der Kupplungsfeder (51) eine Federvorspannung ergibt, und daß am Spindelgehäuse (1) eine koaxiale, drehbar geführte und axial unverschiebbare Stellhülse (45) vorgesehen ist, die beim Verdrehen über eine Steuerschräge (46) die Kupplungshülse (10) zunächst in ihrer dem ausgekuppelten Zustand entsprechenden Lage aus ihrer dem Ausgangszustand der Kupplungsfeder (51) entsprechenden Drehstellung in Drehrichtung mitnimmt und dann in Verbindung mit der dadurch vorgespannten Kupplungsfeder (51) in die dem eingekuppelten Zustand entsprechende Lage verstellt, wenn der Steuervorsprung (40) den mittleren axial verlaufenden Nutabschnitt (43'') erreicht, sowie danach die Kupplungshülse (10) wieder zur Rückstellung in die dem ausgekuppelten Zustand entsprechende Lage freigibt, wenn der Steuervorsprung (40) sich in einem der beiden anderen axial verlaufenden Nutabschnitte (43', 43''') befindet.

19. Bohrvorrichtung nach Anspruch 18, dadurch gekennzeichnet, daß an den Wänden der Steuernut (41) und/oder am Steuervorsprung (40) den Übergang des Steuervorsprungs (40) zwischen den in Umfangsrichtung und den axial verlaufenden Nutabschnitten (42', 43'' bzw. 43', 43'', 43''') erleichternde Leitschrägen (44) vorgesehen sind.

20. Bohrvorrichtung nach Anspruch 18 oder 19, dadurch gekennzeichnet, daß die Stellhülse (45) gegenüber dem Spindelgehäuse (1) in Raststellungen (47) einrastet, in welchen sie die Rückstellung der Kupplungshülse (10) in deren dem ausgekuppelten Zustand entsprechende Lage freigibt.

21. Bohrvorrichtung nach einem der Ansprüche 18 bis 20, dadurch gekennzeichnet, daß die Kupplungshülse (10) einen Lösevorsprung (52) und die Stellhülse (45) einen dem Lösevorsprung (52) zugeordneten Stellnocken (53) trägt, die in der dem ausgekuppelten Zustand entsprechenden axialen Lage der Kupplungshülse (10) in Umfangsrichtung einander berührungslos passieren, in der dem eingekuppelten Zustand entsprechenden Lage der Kupplungshülse (10) dagegen in Umfangsrichtung aneinander zum Anschlag kommen, wenn jeweils die Kupplungshülse (10) und die Stellhülse (45) gegeneinander verdreht werden, wobei der Anschlag von Lösevorsprung (52) und Stellnocken (53) aneinander in derart geneigten Anschlagflächen (54) erfolgt, daß der Stellnocken (53) den Lösevorsprung (52) mit einer axialen Kraftkomponente in derjenigen Richtung beaufschlagt, in der die Verschiebung der Kupplungshülse (10) aus ihrer dem eingekuppelten Zustand entsprechenden Lage in ihre dem ausgekuppelten Zustand entsprechende Lage stattfindet.

22. Bohrvorrichtung nach einem der Ansprüche 9 bis 21, dadurch gekennzeichnet, daß zwischen dem Spindelgehäuse (1) einerseits und dem Stellring (23), dem Betätigungsring (34) oder der Stellhülse (45) andererseits ein deren Drehstellung relativ zum Spindelgehäuse (1) erfassender Stellungsmelder (57) vorgesehen ist, der eine den Antrieb der Bohrspindel (2) aus- und einschaltende Schalteinrichtung derart steuert, daß der Spindelantrieb ausgeschaltet ist, wenn der Stellring (23), der Betätigungsring (34) oder die Stellhülse (45) aus der Drehstellung, die der Lage der Kupplungshülse (10) im ausgekuppelten Zustand der Kupplungseinrichtung (100) entspricht, in die Drehstellung verstellt wird, die der Lage der Kupplungshülse (10) im eingekuppelten Zustand der Kupplungseinrichtung (100) entspricht.

23. Bohrvorrichtung nach Anspruch 22, dadurch gekennzeichnet, daß der Stellungsmelder (57) einen berührungslos arbeitenden induktiven Näherungsschalter (58) auf der Seite des Spindelgehäuses (1) und einen den Näherungsschalter (58) magnetisch beeinflussenden Indikatorstreifen (59) am Stellring (23), Betätigungsring (34) oder an der Stellhülse (45) umfaßt.

24. Bohrvorrichtung nach einem der Ansprüche 1 bis 23, dadurch gekennzeichnet, daß bei einem Spindelgehäuse (1) mit einem mit der Bohrspindel (2) koaxialen Gehäusehals (13) auf diesen unverrückbar eine Futterhülse (11) aufgesetzt ist, an der die Kupplungshülse (10) und alle spindelgehäuseseitigen Teile der Sperreinrichtung angeordnet bzw. geführt sind.

## Claims

1. A drilling apparatus comprising a drivable drilling spindle (2) mounted rotatably in a spindle housing (1) and a drilling chuck (3) connected to the spindle end with chuck jaws (4) for accommodating a drilling tool, wherein the drilling chuck includes a chuck body (5) which is coaxial with and non-rotatably connected to the drilling spindle and a clamping sleeve (9) which is coaxial and rotatable relative to the chuck body (5) for displacement of the chuck jaws (4), and wherein for tightening and loosening the drilling chuck (3) through the drilling spindle (2) provided between the spindle housing (1) and the clamping sleeve (9) is a coupling device (100) including a coupling sleeve (10) which is held on the spindle housing (1) in such a way as to be prevented from also rotating with the drilling chuck (3) and which is axially displaceable relative to the drilling chuck and which in a position of being advanced towards the drilling chuck (3) and corresponding to the coupled condition of the coupling device (100) force-lockingly connects the clamping sleeve (9) to the spindle housing (1) in the peripheral direction and is displaceable by an uncoupling spring into a position of being set back from the drilling chuck and corresponding to the uncoupled condition of the coupling device (100) and in which no coupling connection to the clamping sleeve (9) occurs, characterised in that the coupling sleeve (10) is held in the coupled condition by a locking device and that the locking device opens and enables displacement of the coupling sleeve (10) into the uncoupled condition when the torque transmitted in the coupled condition between the clamping sleeve (9) and the coupling sleeve (10) exceeds a predetermined value.

2. A drilling apparatus according to claim 1 characterised in that provided on the coupling sleeve (10) and the clamping sleeve (9) are mutually associated coupling members (9', 10') which are held by a coupling spring in mutual coupling engagement in the coupled condition of the coupling device (100) and which bear against each other in the peripheral direction with flank surfaces (18) which are so inclined with respect to the spindle axis that, at the torque value which is predetermined for opening of the locking device, the clamping sleeve (9) applies to the coupling sleeve (10) by way of the flank surfaces (18) axially directed force components which open the locking device.

3. A drilling apparatus according to claim 2 characterised in that the coupling members (9', 10') are formed in a sawtooth-like configuration with a steeper flank surface formed by the tooth face and a shallower flank surface formed by the tooth back, wherein on the clamping sleeve (9), in the direction of rotation thereof corresponding to opening of the drilling chuck, the tooth face of each coupling member (9') precedes its tooth back.

4. A drilling apparatus according to claim 2 or claim 3 characterised in that the locking device is opened by an axial displacement travel of the coupling sleeve (10), which at the most is equal to the mutual overlap, which is at the maximum in the axial direction, of the coupling members (9', 10') in the coupled condition of the coupling device (100).

5. A drilling apparatus according to claim 4 characterised in that the coupling sleeve (10) is guided non-rotatably on the spindle housing (1).

6. A drilling apparatus according to claim 5 characterised in that the locking device is in the form of a detent device with an annular groove (15) as a detent seat and a spring ring (16) latching therein as a detent spring and detent member, wherein the spring ring (16) serves as a coupling spring and in the latched condition holds the coupling sleeve (10) in its position corresponding to the coupled condition of the coupling device (100) and disengages from the annular groove (15) under the axial force components which the clamping sleeve (9) applies to the coupling sleeve (10) by way of the flank surfaces (18) at the torque value which is predetermined for opening of the locking device.

7. A drilling apparatus according to claim 6 characterised in that in the direction of displacement of the coupling sleeve (10), which corresponds to uncoupling of the coupling device (100), adjoining the edge (19) of the annular groove (15) is an annular surface (20) which tapers substantially conically and on which the spring ring (16) which is disengaged from the annular groove (15) slips as a result of its spring stress in the direction of taper, wherein the spring ring (16) serves as a decoupling spring and displaces the coupling sleeve (10) into its position corresponding to the uncoupled condition.

8. A drilling apparatus according to claims 6 and 7 characterised in that the annular groove (15) and the annular surface (20) are provided on the spindle housing (1) and the spring ring (16) is held to the coupling sleeve (10).

9. A drilling apparatus according to one of claims 6 to 8 characterised in that arranged on the spindle housing (1) is a rotatably guided setting ring (23) which upon a rotary movement displaces the coupling sleeve (10) into its position corresponding to the coupled condition.

10. A drilling apparatus according to claim 9 characterised in that the setting ring (23) is axially immovable and upon rotation displaces the coupling sleeve (10) by way of a setting cam (24).

11. A drilling apparatus according to claim 10 characterised in that the setting cam (24) has ramp portions (25) which are distributed over the ring periphery and which each follow a respective intermediate portion (26), wherein the ramp portions (25) displace the coupling sleeve (10) into the position corresponding to the coupled condition and the intermediate portions (26) enable displacement of the coupling sleeve (10) into the position thereof corresponding to the uncoupled condition.

12. A drilling apparatus according to claim 11 characterised in that after rotation through the length of an intermediate portion (26) and a ramp portion (25) the setting ring (23) engages in a detent position (27) on the spindle housing (1), in which displacement of the coupling sleeve (10) into the position thereof corresponding to the uncoupled condition is enabled.

13. A drilling apparatus according to claim 11 characterised in that the setting ring (23) is limited by abutment surfaces (28) on the part of the spindle housing (1) to a rotary travel of in each case only the length of a respective ramp portion (25) and that there is provided a return spring (29) which after each rotary movement which displaces the coupling sleeve (10) into its position corresponding to the coupled condition, rotates the setting ring (23) back into its initial position in which displacement of the coupling sleeve (10) is enabled into the position thereof corresponding to the uncoupled condition by the setting ring (23).

14. A drilling apparatus according to claim 11 characterised in that the ramp portions (25) and the intermediate portions (26) are formed by a control groove (30) which is provided on the wall of the coupling sleeve (10) and which accommodates control projections (31) provided on the setting ring (23) and which in the region of each intermediate portion (26) has an abutment surface (32) against which a respective control projection (31) comes to bear in the direction of rotation of the setting ring (23) when the coupling sleeve (10) is displaced by the preceding ramp portion (25) into the position thereof corresponding to the coupled condition.

15. A drilling apparatus according to claim 5 characterised in that the coupling sleeve (10) is displaceable between two axially spaced-apart limiting means (34'. 34'') on an actuating ring (34) and is held by the coupling spring (50) in contact against the limiting means (34'') which is towards the drilling chuck (3), wherein the displacement travel between the limiting means (34', 34'') is at least equal to the axial displacement travel of the coupling sleeve (10), which opens the locking device, and same is equal to the spring travel by which the coupling spring (50) can be stressed by the axial force components which the clamping sleeve (9) exerts on the coupling sleeve (10) by way of the flank surfaces (18) at the torque value which is predetermined for opening of the locking device, that in addition the actuating ring (34) is rotatable on the spindle housing (1) between an initial position and a coupling position and is positively guidedly axially displaceable at a control cam so that upon displacement thereof the actuating ring (34) displaces the coupling sleeve (10) between its positions corresponding to the coupled condition and the uncoupled condition of the coupling device (100), wherein the initial position of the actuating ring (34) corresponds to the position of the coupling sleeve (10) in the uncoupled condition and the coupling position corresponds to its position in the coupled condition of the coupling device (100), and wherein the actuating ring (34) is connected in the peripheral direction to the coupling sleeve (10) by the uncoupling spring (38) which is stressed upon rotation of the actuating ring (34) from the initial position into the coupling position and that the actuating ring (34) in the coupling position is supported against the force of the uncoupling spring (38) at the coupling sleeve (10) in an abutment (39) which is cleared by displacement of the coupling sleeve (10) by its axial displacement travel opening the locking device, and then enables return rotary movement of the actuating ring (34) into the initial position by the uncoupling spring (38).

16. A drilling apparatus according to claim 15 characterised in that the coupling spring (50) is formed by a plurality of spring members (50') which are arranged along the periphery of the coupling sleeve (10) and which are arranged and prestressed between the coupling sleeve (10) on the one hand and the actuating ring (34) on the other hand.

17. A drilling apparatus according to claim 15 or claim 16 characterised in that the control cam for the actuating ring (34) is formed by control grooves (36) on the part of the spindle housing (1) and the actuating ring (34) is provided with control projections (37) which engage into the control grooves (36).

18. A drilling apparatus according to claim 4 characterised in that the coupling sleeve (10) which is rotatable relative to the spindle housing (1) against the force of the coupling spring (51) is guided with a control projection (40) in a control groove (41) which is provided on the part of the spindle housing (1) and which has two groove portions (42', 42'') which extend in axially juxtaposed relationship in the peripheral direction and three groove portions (43', 43'', 43''') which extend axially and which connect said groove portions, that the axial spacing between the two groove portions (42', 42'') extending in the peripheral direction is equal to the axial displacement travel of the coupling sleeve (10) between its two positions corresponding to the uncoupled and the coupled condition and the peripheral spacing between each two successive axially extending groove portions (43', 43'' and 43'', 43''') respectively is substantially equal to the spring travel by which, upon closing or opening of the drilling chuck (3), the coupling spring (51) is stressed from its initial condition under the torque value which is predetermined for opening of the locking device, in the one direction of rotation or the other respectively, wherein the central axially extending groove portion (43'') is somewhat displaced in the peripheral direction relative to the position of the control projection (40), which corresponds to the initial condition of the coupling spring (51), so that the spring travel of the coupling spring (51), which corresponds to said displacement, affords a spring prestressing effect, and that provided on the spindle housing (1) is a coaxial, rotatably guided and axially immovable setting sleeve (45) which upon rotation by way of an inclined control surface (46) firstly entrains the coupling sleeve (10) in the direction of rotation in its position corresponding to the uncoupled condition out of its rotary position corresponding to the initial condition of the coupling spring (51) and then in conjunction with the coupling spring (51) which is prestressed thereby displaces it into the position corresponding to the coupled condition when the control projection (40) reaches the central axially extending groove portion (43'') and thereafter releases the coupling sleeve (10) again for resetting into the position corresponding to the uncoupled condition when the control projection (40) is in one of the other two axially extending groove portions (43', 43''').

19. A drilling apparatus according to claim 18 characterised in that provided at the walls of the control groove (41) and/or at the control projection (40) are inclined guide surfaces (44) which facilitate the transition of the control projection (40) between the groove portions (42', 42'' and 43', 43'', 43''' respectively) which extend in the peripheral direction and axially.

20. A drilling apparatus according to claim 18 or claim 19 characterised in that the setting sleeve (45) latches with respect to the spindle housing (1) in detent positions (47) in which it enables resetting of the coupling sleeve (10) into the position thereof corresponding to the uncoupled condition.

21. A drilling apparatus according to one of claims 18 to 20 characterised in that the coupling sleeve (10) carries a release projection (52) and the setting sleeve (45) carries a setting projection (53) associated with the release projection (52), which projections in the axial position of the coupling sleeve (10) corresponding to the uncoupled condition pass each other without contact in the peripheral direction, but in the position of the coupling sleeve (10) corresponding to the coupled condition come into contact against each other in the peripheral direction when the coupling sleeve (10) and the setting sleeve (45) respectively are rotated relative to each other, wherein abutment of the release projection (52) and the setting projection (53) against each other occurs at abutment surfaces (54) which are inclined in such a way that the setting projection (53) acts on the release projection (52) with an axial force component in that direction in which displacement of the coupling sleeve (10) out of its position corresponding to the coupled condition into its position corresponding to the uncoupled condition takes place.

22. A drilling apparatus according to one of claims 9 to 21 characterised in that provided between the spindle housing (1) on the one hand and the setting ring (23), the actuating ring (34) or the setting sleeve (45) on the other hand is a position signalling device (57) which detects the rotational position thereof relative to the spindle housing (1) and which controls a switching device for switching the drive of the drilling spindle (2) on and off, in such a way that the spindle drive is switched off when the setting ring (23), the actuating ring (34) or the setting sleeve (45) is displaced from the rotary position which corresponds to the position of the coupling sleeve (10) in the uncoupled condition of the coupling device (100) into the rotary position which corresponds to the position of the coupling sleeve (10) in the coupled condition of the coupling device (100).

23. A drilling apparatus according to claim 22 characterised in that the position signalling device (57) includes an inductive proximity switch (58) operating in a contact-less mode on the spindle housing (1) and an indicator strip (59) which magnetically influences the proximity switch (58), on the setting ring (23), the actuating ring (34) or the setting sleeve (45).

24. A drilling apparatus according to one of claims 1 to 23 characterised in that, in the case of a spindle housing (1) with a housing neck (13) which is coaxial with the drilling spindle (2), a chuck sleeve (11) is immovably fitted on to said neck, the coupling sleeve (10) and all parts of the locking device at the spindle housing side being arranged or guided on said chuck sleeve (11).

## Revendications

1. Dispositif de perçage comprenant une broche de perçage (2) montée mobile en rotation dans un corps de broche (1) et susceptible d'être entraînée, et un mandrin de perçage (3) raccordé à l'extrémité de la broche et comportant des mors de serrage (4) pour recevoir un outil de perçage, le mandrin de perçage présentant un corps de mandrin (5) disposé coaxialement à la broche de perçage et solidaire en rotation de cette dernière et, en vue du réglage des mors de serrage (4), une douille de serrage (9) coaxiale, mobile en rotation par rapport au corps de mandrin (5), un dispositif de couplage (100) étant prévu entre le corps de broche (1) et la douille de serrage (9) en vue du serrage et du desserrage du mandrin de perçage (3) par la broche de perçage (2), lequel dispositif comprend un manchon de couplage (10) qui est maintenu sur le corps de broche (1) de manière à ne pas tourner avec le mandrin de perçage (3), qui est déplaçable axialement par rapport à ce dernier et qui, dans la position avancée contre le mandrin de perçage (3) correspondant à l'état couplé du dispositif de couplage (100), rend la douille de serrage (9) solidaire dans la direction circonférentielle du corps de broche (1) et peut être ramené par un ressort de découplage dans une position en retrait par rapport au mandrin de perçage, correspondant à l'état découplé du dispositif de couplage (100), position dans laquelle il n'existe pas de liaison de couplage avec la douille de serrage (3), caractérisé par le fait que le manchon de couplage (10) est maintenu par un dispositif de verrouillage à l'état couplé et que le dispositif de verrouillage s'ouvre et autorise le déplacement du manchon de couplage (10) à l'état découplé lorsque le couple transmis à l'état couplé entre la douille de serrage (3) et le manchon de couplage (10) dépasse une valeur prédéterminée.

2. Dispositif de perçage suivant la revendication 1, caractérisé par le fait que le manchon de couplage (10) et la douille de serrage (9) présentent des organes de couplage (9', 10') associés qui, à l'état couplé du dispositif de couplage (100), sont maintenus en prise de couplage réciproque par un ressort de couplage et sont en contact réciproque dans la direction circonférentielle par des surfaces de flancs (18) qui sont inclinées par rapport à l'axe de broche de telle manière que sous l'effet du couple prédéterminé pour l'ouverture du dispositif de verrouillage, la douille de serrage (9) exerce, en passant par les surfaces de flancs (18), sur le manchon de couplage (10), des composantes de force axiales, lesquelles ouvrent le dispositif de verrouillage.

3. Dispositif de perçage suivant la revendication 2, caractérisé par le fait que les organes de couplage (9', 10') sont conformés en dents de scie avec un flanc plus raide constitué par le flanc avant des dents et un flanc plus plat constitué par le flanc arrière des dents, le flanc avant des dents de chaque organe de couplage (9') étant, sur la douille de serrage (9), en avant par rapport à son flanc arrière dans le sens de rotation correspondant à l'ouverture du mandrin de serrage.

4. Dispositif de perçage suivant la revendication 2 ou 3, caractérisé par la fait que le dispositif de verrouillage est ouvert par une course axiale du manchon de couplage (10) qui est tout au plus égale au chevauchement axial réciproque maximal des organes de couplage (9', 10') à l'état couplé du dispositif de couplage (100).

5. Dispositif de perçage suivant la revendication 4, caractérisé par le fait que le manchon de couplage (10) est guidé sur le corps de broche (1) de manière à ne pas pouvoir tourner.

6. Dispositif de perçage suivant la revendication 5, caractérisé par le fait que le dispositif de verrouillage est réalisé sous forme de dispositif d'encliquetage comprenant une gorge annulaire (15) en tant que logement d'encliquetage et un anneau élastique (16) en tant que ressort d'encliquetage et organe d'encliquetage pouvant s'encliqueter dans ledit logement, l'anneau élastique (16) servant de ressort de couplage pour maintenir, en position encliquetée, le manchon de couplage (10) dans sa position correspondant à l'état couplé du dispositif de couplage (100) et se dégageant de la gorge annulaire (15) sous l'effet des composantes de force axiales que la douille de serrage (9) exerce, sous l'action du couple prédéterminé pour l'ouverture du dispositif de verrouillage, par les surfaces de flancs (18) sur le manchon de couplage (10).

7. Dispositif de perçage suivant la revendication 6, caractérisé par le fait que le bord (19) de la gorge annulaire (15) est suivi, dans le sons de déplacement du manchon de couplage (10) correspondant au découplage du dispositif de couplage (100), d'une surface annulaire (20) convergeant à peu près en cône, sur laquelle l'anneau élastique (16) dégagé de la gorge annulaire (15) glisse, sous l'effet de sa tension élastique, dans le sens de convergence, l'anneau élastique (16) servant de ressort de découplage et déplaçant le manchon de couplage (10) dans sa position correspondant à l'état découplé.

8. Dispositif de perçage suivant les revendications 6 et 7, caractérisé par le fait que la gorge annulaire (15) et la surface annulaire (20) sont formées sur le côté du corps de broche (1) et que l'anneau élastique (16) est maintenu sur le manchon de couplage (10).

9. Dispositif de perçage suivant l'une des revendications 6 à 8, caractérisé par le fait que sur le corps de broche (1) est montée mobile en rotation une bague de réglage (23) qui, lors d'un mouvement de rotation, déplace le manchon de couplage (10) à sa position correspondant à l'état couplé.

10. Dispositif de perçage suivant la revendication 9, caractérisé par le fait que la bague de réglage (23) est immobilisée en translation axiale et déplace, lors de la rotation, le manchon de couplage (10) en passant par une came de réglage (24).

11. Dispositif de perçage suivant la revendication 10, caractérisé par le fait que la came de réglage (24) présente des tronçons de rampe (25) répartis sur la circonférence et faisant respectivement suite à un tronçon intermédiaire (26), les tronçons de rampe (25) déplaçant le manchon de couplage (10) à la position correspondant à l'état couplé et les tronçons intermédiaires (26) libérant le déplacement du manchon de couplage (10) à la position correspondant à l'état découplé.

12. Dispositif de perçage suivant la revendication 11, caractérisé par le fait que la bague de réglage (23), après une rotation correspondant à la longueur d'un tronçon intermédiaire (26) et d'un tronçon de rampe (25), s'engage par encliquetage dans une position d'encliquetage (27) sur le corps de broche (1), dans laquelle le manchon de couplage (10) est libéré pour son déplacement à la position correspondant à l'état découplé.

13. Dispositif de perçage suivant la revendication 11, caractérisé par le fait que la mobilité de la bague de réglage (23) est limitée, par des surfaces de butée (28), côté corps de broche (1), à une course angulaire correspondant respectivement à la longueur d'un tronçon de rampe (25) et qu'il est prévu un ressort de rappel (29) qui, après chaque mouvement de rotation amenant le manchon de couplage (10) à sa position correspondant à l'état couplé, ramène la bague de réglage (23) en arrière à la position de départ à laquelle la bague de réglage (23) libère le manchon de couplage (10) en vue de son déplacement à la position correspondant à l'état découplé.

14. Dispositif de perçage suivant la revendication 11, caractérisé par le fait que les tronçons de rampe (25) et les tronçons intermédiaires (26) sont constitués par une rainure de commande (30) qui est prévue sur la paroi du manchon de couplage (10), qui reçoit des saillies de commande (31) formées sur la bague de réglage (23) et qui présente, dans la zone de chaque tronçon intermédiaire (26), une surface de butée (32) contre laquelle respectivement une saillie de commande (31) vient en appui, dans le sens de rotation de la bague de réglage (23), lorsque le manchon de couplage (10) est déplacé par le tronçon de rampe (25) précédant à sa position correspondant à l'état couplé.

15. Dispositif de perçage suivant la revendication 5, caractérisé par le fait que la manchon de couplage (10) est déplaçable en translation entre deux délimitations (34', 34'') axialement espacées sur une bague d'actionnement (34) et est maintenue par le ressort de couplage (50) en appui contre la délimitation (34') située vers le mandrin de perçage (3), la course de déplacement entre les délimitations (34', 34'') étant au moins égale à la course axiale de réglage du manchon de couplage (10), provoquant l'ouverture du dispositif de verrouillage, et étant égale à la course élastique sur laquelle le ressort de couplage (20) peut être tendu par les composantes de force axiales que la douille de serrage (9) exerce, sous l'effet du couple prédéterminé pour l'ouverture du dispositif de verrouillage, par les surfaces de flancs (18) sur le manchon de couplage (10), par la fait que la bague d'actionnement (34) est mobile en rotation sur le corps de broche (1) entre une position de départ et une position de couplage, en étant mobile en translation axiale avec guidage forcé sur une came de commande, de manière que la bague d'actionnement (34), lors de sa translation, déplace le manchon de couplage (10) entre ses positions correspondant à l'état couplé et à l'état découplé du dispositif de couplage (100), la position de départ de la bague d'actionnement (34) correspondant à la position du manchon de couplage (10) à l'état découplé, et la position de couplage correspondant à sa position à l'état couplé du dispositif de couplage (100), la bague d'actionnement (34) étant reliée dans le sens circonférentiel au manchon de couplage (100) par le ressort de découplage (38) qui se tend lors de la rotation de la bague d'actionnement (34) de la position de départ à la position de couplage, et par le fait que la bague d'actionnement (34) prend appui, en position de couplage, contre la force du ressort de découplage (38) sur le manchon de couplage (10), dans une butée (39) qui est effacée par translation du manchon de couplage (10) sur sa course de déplacement axial ouvrant le dispositif de verrouillage et qui libère alors la rotation en arrière de la bague d'actionnement (34) à la position de départ par le ressort de découplage (38).

16. Dispositif de perçage suivant la revendication 15, caractérisé par le fait que le ressort de couplage (50) est formé par plusieurs éléments de ressort (50') qui sont répartis le long de la circonférence du manchon de couplage (10) et sont disposés et précontraints entre le manchon de couplage (10), d'une part, et la bague d'actionnement (34), d'autre part.

17. Dispositif de perçage suivant la revendication 15 ou 16, caractérisé par le fait que la came de commande pour la bague d'actionnement (34) est constituée par des rainures de commande (36) côté corps de broche (1) et que la bague d'actionnement (34) est munie de saillies de commande (37) pénétrant dans les rainures de commande (36).

18. Dispositif de perçage suivant la revendication 4, caractérisé par le fait que la manchon de couplage (10) déplaçable angulairement par rapport au corps de broche (1) à l'encontre de la force du ressort de couplage (51) est guidé par une saillie de commande (40) dans une rainure de commande (41) prévue côté corps de broche (1) et présentant deux tronçons de rainure (42', 42'') s'étendant axialement côte à côte dans la direction circonférentielle et trois tronçons de rainure (43', 43'', 43''') s'étendant axialement et reliant lesdits deux tronçons de rainure, que la distance axiale entre les deux tronçons de rainure (42', 42'') s'étendant dans la direction circonférentielle est égale à la course axiale du manchon de couplage (10) entre ses deux positions correspondant à l'état découplé et à l'état couplé et la distance circonférentielle entre respectivement deux tronçons successifs (43', 43'' ou 43'', 43''') parmi les tronçons de rainure s'étendant axialement est essentiellement égale à la course élastique sur laquelle, lors de la fermeture ou de l'ouverture du mandrin de perçage (3), le ressort de couplage (51) se tend respectivement dans un sans de rotation ou dans l'autre à partir de sa position de départ sous l'effet du couple prédéterminé pour l'ouverture du dispositif de verrouillage, le tronçon médian (43') parmi les tronçons de rainure s'étendant axialement étant quelque peu décalé dans la direction circonférentielle, par rapport à la position de la saillie de commande (40) correspondant à l'état de départ du ressort de couplage (51) de sorte que la course élastique du ressort de couplage (51) correspondant à ce décalage définit une précontrainte de ressort, et qu'il est prévu, sur le corps de broche (1), une douille de réglage (45) coaxiale, mobile en rotation et immobilisée en translation axiale, laquelle, lors de la rotation, d'abord entraîne le manchon de couplage (10) par une rampe de commande (46), dans sa position correspondant à l'état découplé, dans le sens de rotation à partir de la position angulaire correspondante à l'état de départ du ressort de couplage (51) et ensuite le déplace, en combinaison avec le ressort de couplage (51) ainsi précontraint, à la position correspondant à l'état couplé lorsque la saillie de commande (40) atteint le tronçon de rainure (43'') médian, orienté axialement, et libère ensuite de nouveau le manchon de couplage (10) en vue du retour à la position correspondant à l'état découplé lorsque la saillie de commande (40) se trouve dans l'un des deux autres tronçons de rainure (43', 43''') orientés axialement.

19. Dispositif de perçage suivant la revendication 18, caractérisé par le fait que des rampes de guidage (44) facilitant le passage de la saillie de commande (40) entre les tronçons de rainure (42', 43'' ou 43', 43'', 43''') s'étendant dans la direction circonférentielle et dans la direction axiale sont prévues sur les parois de la rainure de commande (41) et/ou sur la saillie de commande (40).

20. Dispositif de perçage suivant la revendication 18 ou 19, caractérisé par le fait que la douille de réglage (45) est immobilisée par encliquetage par rapport au corps de broche (1) dans des positions d'encliquetage (47) dans lesquelles elle libère le retour du manchon de couplage (10) à la position correspondant à l'état découplé.

21. Dispositif de perçage suivant l'une des revendications 18 à 20, caractérisé par le fait que le manchon de couplage (10) porte une saillie de desserrage (52) et la douille de réglage (45) porte une saillie de réglage (53) associée à la saillie de desserrage (52), ces saillies passant sans se rencontrer l'une au regard de l'autre dans la direction circonférentielle dans la position axiale du manchon de couplage (10) correspondant à l'état découplé, mais venant par contre en butée l'une contre l'autre dans la direction circonférentielle dans la position du manchon de couplage (10) correspondant à l'état couplé, lorsque le manchon de couplage (10) et la douille de réglage (45) sont respectivement tournés l'une par rapport à l'autre, la butée de la saillie de desserrage (52) et de la saillie de réglage (53) l'une contre l'autre ayant lieu par des surfaces de butée (54) inclinées de telle manière que la saillie de réglage (53) sollicite la saillie de desserrage (52) avec une composante de force axiale dans la direction dans laquelle a lieu le déplacement en translation du manchon de couplage (10) de sa position correspondant à l'état couplé à sa position correspondant à l'état découplé.

22. Dispositif de perçage suivant l'une des revendication 9 à 21, caractérisé par le fait qu'un détecteur de position (57) est disposé entre le corps de broche (1) d'une part et la bague de réglage (53), la bague d'actionnement (34) ou la douille de réglage (45) d'autre part, pour détecter la position angulaire relative de cette bague ou douille par rapport au corps de broche (1), ce détecteur commandant un dispositif de commutation qui coupe et met en marche l'entraînement de la broche de perçage (2) de telle manière que l'entraînement de la broche soit coupé lorsque la bague de réglage (23), la bague d'actionnement (34) ou la douille de réglage (45) est déplacée de la position angulaire qui correspond à la position du manchon de couplage (10) à l'état découplé du dispositif de couplage (100), à la position angulaire qui correspond à, la position du manchon de couplage (10) à l'état couplé du dispositif de couplage (100).

23. Dispositif de perçage suivant la revendication 22, caractérisé par le fait que le détecteur de position (57) comprend un détecteur de proximité (58) inductif, travaillant sans contact côté corps de broche (1) et un ruban indicateur (59) agissant par voie magnétique sur le détecteur de proximité (58), côté bague de réglage (23), bague d'actionnement (34) ou douille de réglage (45).

24. Dispositif de perçage suivant l'une des revendication 1 à 23, caractérisé par le fait que dans le cas d'un corps de broche (1) présentant un collet (13) coaxial à la broche de perçage (2), une douille-fourreau (11) sur laquelle le manchon de couplage (10) et toutes les parties du dispositif de verrouillage, côté corps de broche sont disposés ou guidés, est montée et immobilisée sur ledit collet.
